# EUROPEAN PATENT APPLICATION

(11) **EP 4 838 854 A1**
(43) Date of publication of application: **11.11.2026**
(21) Application number: 25752339.9
(22) Date of filing: 04.02.2025
(51) Int. Cl.: H04L 41/082, H04L 41/50, H04L 41/0869, H04L 41/0853, H04W 24/02

(54) **ELECTRONIC DEVICE AND METHOD FOR RIC SERVICE QUERY**

(30) Priority: 05.02.2024 KR 20240017758
(71) Applicant: Samsung Electronics Co., Ltd., Suwon-si, Gyeonggi-do 16677 (KR)
(72) Inventor: SONG, Junhyuk, Suwon-si Gyeonggi-do 16677 (KR); KANG, Seungwon, Suwon-si Gyeonggi-do 16677 (KR); KHO, Youngsung, Suwon-si Gyeonggi-do 16677 (KR); KIM, Chulmin, Suwon-si Gyeonggi-do 16677 (KR)
(74) Representative: Gulde & Partner
(86) International application number: PCT/KR2025/001649
(87) International publication number: WO 2025/170293

(57) **Abstract**

A method performed by an E2 node is provided according to embodiments. The method may comprise an operation for receiving a radio access network (RAN) intelligent controller (RIC) service query message from a Near-real time (RT) RIC. The method may comprise an operation for transmitting a RIC service update message to the Near-RT RIC in response to the RIC service query message. The RIC service query message may include a message type, a transaction identifier (ID), and a list of RAN functions previously accepted by the Near-RT RIC. The list of RAN functions may include, for each RAN function, a RAN function ID, a RAN function revision, and a RAN function object identifier (OID) indicating a specific E2 service model (E2SM).

## Description

### [Technical Field]

The following descriptions relate to an electronic device and a method for a radio access network (RAN) intelligent controller (RIC) service query.

### [Background Art]

In order to meet the increasing demand for wireless data traffic after the commercialization of 4G (4^{th} generation) communication systems, efforts have been made to develop improved 5G (5^{th} generation) communication systems or pre-5G communication systems. For this reason, 5G communication systems or pre-5G communication systems are referred to as Beyond 4G Network communication systems or Post Long Term Evolution (LTE) systems.

To achieve high data transmission rates, the implementation of 5G communication systems in a millimeter wave (mmWave) band (e.g., 60 GHz band) is being considered. In order to mitigate a path loss of radio waves in the millimeter wave band and extend a propagation distance of the radio waves, beamforming, massive MIMO, Full Dimensional MIMO (FD-MIMO), array antenna, analog beam-forming, and large scale antenna technologies are being discussed in the 5G communication system.

In addition, in order to enhance network performance, technologies such as evolved small cells, advanced small cells, cloud radio access network (cloud RAN), ultra-dense network, device to device communication (D2D), wireless backhaul, moving network, cooperative communication, coordinated multi-points (CoMP), and interference cancellation are being developed in 5G communication systems.

In addition, advanced coding modulation (ACM) techniques such as hybrid frequency shift keying and quadrature amplitude modulation (FQAM) and sliding window superposition coding (SWSC) and advanced access technologies such as filter bank multi-carrier (FBMC), non-orthogonal multiple access (NOMA), and sparse code multiple access (SCMA) are being developed in the 5G systems.

With the commercialization of 5G systems and new radio or next radio (NR) to meet the demand for wireless data traffic, high-data-rate services are being provided to users through 5G systems, similar to 4G, and various wireless communication services, including Internet of Things (IoT) and services requiring high reliability for specific purposes, are expected to be provided. In a current system where the fourth-generation communication system and the fifth-generation communication system are mixed, open radio access network (O-RAN) established by operators and equipment providers defines E2 application protocol (E2AP) standard in an application protocol of E2 interface between an E2 node and a near-real-time (Near-RT) radio access network (RAN) intelligent controller (RIC).

Looking back at the development process of wireless communication generations, technologies have been developed mainly for services targeting humans, such as voice, multimedia, and data. After the commercialization of the 5^{th} Generation (5G) communication system, it is expected that the number of connected devices will increase explosively and be connected to communication networks. Examples of objects connected to the network include vehicles, robots, drones, home appliances, displays, smart sensors installed in various infrastructures, construction machinery, and factory equipment. Mobile devices are expected to evolve into various form factors, such as augmented reality glasses, virtual reality headsets, and holographic devices. In the 6^{th} Generation (6G) era, efforts are being made to develop an improved 6G communication system to connect hundreds of billions of devices and objects and provide various services. For this reason, the 6G communication system is referred to as a system beyond 5G.

In the 6^{th} Generation (6G) communication system, which is predicted to be realized around 2030, a maximum transmission speed is tera (i.e., 1,000 giga) bit per second (bps), and the wireless latency is 100 microseconds (µsec). That is, compared to the 5G communication system, a transmission speed in the 6G communication system is 50 times faster, and the wireless latency is reduced to one-tenth.

To achieve such high data transmission speed and ultra-low latency, the 6G communication system is being considered for implementation in a Terahertz (THz) band (e.g., such 95 Gigahertz (GHz) to 3 THz). The Terahertz band is expected to place greater importance on technologies that ensure signal reach distance, that is, coverage, due to more serious path loss and atmospheric absorption phenomena compared to the millimeter-wave (mmWave) band introduced in 5G. As key technologies to ensure coverage, multiple antenna transmission technologies such as radio frequency (RF) components, antennas, a new waveform superior to orthogonal frequency division multiplexing (OFDM) in terms of coverage, beamforming, massive multiple-input and multiple-output (massive MIMO), full dimensional MIMO (FD-MIMO), array antenna, and large-scale antenna need to be developed. In addition, to improve a coverage of terahertz band signals, new technologies such as metamaterial-based lenses and antennas, high-dimensional spatial multiplexing technology using orbital angular momentum (OAM), and reconfigurable intelligent surface (RIS) are being discussed.

In order to improve frequency efficiency and enhance the system network, the 6G communication system is developing technologies such as a full duplex technology, which enables the uplink and downlink to utilize simultaneously the same frequency resources, a network technology that integrally utilizes satellites and high-altitude platform stations (HAPS), a network structure innovation technology that supports mobile base stations and enables network operation optimization and automation, a dynamic spectrum sharing technology through collision avoidance based on spectrum usage prediction, an artificial intelligence (AI)-based communication technology that realizes system optimization by internalizing an end-to-end AI support function and utilizing AI from a design stage, and a next-generation distributed computing technology that realizes services with complexities that exceed limits of terminal computing capabilities by utilizing ultra-high-performance communication and computing resources (e.g., Mobile Edge Computing (MEC), cloud, and the like). In addition, efforts are continuously being made to strengthen connectivity between devices, further optimize the network, promote the softwareization of network entities, and increase the openness of wireless communication through the design of new protocols to be used in the 6G communication system, the implementation of hardware-based security environments, the development of mechanisms for the safe utilization of data, and the development of technologies for maintaining privacy.

Due to the research and development of the 6G communication system, it is expected that the next hyper-connected experience will become possible through the hyper-connectivity of the 6G communication system, which includes not only interconnection between objects but also connections between humans and objects. Specifically, the 6G communication system is expected to enable the provision of services such as truly immersive eXtended Reality (XR), high-fidelity mobile hologram, and digital replica. In addition, services such as remote surgery, industrial automation, and emergency response will be provided through the 6G communication system with enhanced security and reliability, which will be applied in various fields such as industry, healthcare, automotive, and home appliances.

In the 6G communication system, it is expected that functions of a RAN will be further subdivided and divided into a service subscriber form and a service provider form. In a service-based network, a subscription service acknowledgement procedure for a service subscription status will be applied to various functions.

### [Disclosure]

### [Technical Solution]

In embodiments, a method performed by an E2 node is provided. The method may comprise receiving a RIC service query message from a Near-real time (RT) radio access network (RAN) intelligent controller (Near-RT RIC). The method may comprise, in response to the RIC service query message, transmitting a RIC service update message to the Near-RT RIC. The RIC service query message may include a message type, a transaction identifier (ID), and a list of RAN functions previously accepted by the Near-RT RIC. The list of RAN functions may include, for each RAN function, a RAN function ID, a RAN function revision, and a RAN function object identifier (OID) indicating a specific E2 service model (E2SM).

In embodiments, a method performed by a Near-real time (RT) radio access network (RAN) intelligent controller (Near-RT RIC) is provided. The method may comprise transmitting a RIC service query message to an E2 node. The method may comprise receiving a RIC service update message from the E2 node. The RIC service query message may include a message type, a transaction identifier (ID), and a list of RAN functions previously accepted by the Near-RT RIC. The list of RAN functions may include, for each RAN function, a RAN function ID, a RAN function revision, and a RAN function object identifier (OID) indicating a specific E2 service model (E2SM).

In embodiments, an electronic device of an E2 node is provided. The electronic device may comprise at least one processor, and memory storing instructions. The instructions, when executed by the at least one processor, may cause the E2 node to receive a RIC service query message from a Near-real time (RT) radio access network (RAN) intelligent controller (Near-RT RIC), and, in response to the RIC service query message, transmit a RIC service update message to the Near-RT RIC. The RIC service query message may include a message type, a transaction identifier (ID), and a list of RAN functions previously accepted by the Near-RT RIC. The list of RAN functions may include, for each RAN function, a RAN function ID, a RAN function revision, and a RAN function object identifier (OID) indicating a specific E2 service model (E2SM).

In embodiments, an electronic device of a Near-real time (RT) radio access network (RAN) intelligent controller (Near-RT RIC) is provided. The electronic device may comprise at least one processor, and memory storing instructions. The instructions, when executed by the at least one processor, may cause the Near-RT RIC to transmit a RIC service query message to an E2 node, and receive a RIC service update message from the E2 node. The RIC service query message may include a message type, a transaction identifier (ID), and a list of RAN functions previously accepted by the Near-RT RIC. The list of RAN functions may include, for each RAN function, a RAN function ID, a RAN function revision, and a RAN function object identifier (OID) indicating a specific E2 service model (E2SM).

In embodiments, an electronic device of an E2 node is provided. The electronic device may comprise at least one transceiver and at least one processor. The at least one processor may be configured to receive a RIC service query message from a Near-real time (RT) radio access network (RAN) intelligent controller (Near-RT RIC) through the at least one transceiver, and, in response to the RIC service query message, transmit a RIC service update message to the Near-RT RIC through the at least one transceiver. The RIC service query message may include a message type, a transaction identifier (ID), and a list of RAN functions previously accepted by the Near-RT RIC. The list of RAN functions may include, for each RAN function, a RAN function ID, a RAN function revision, and a RAN function object identifier (OID) indicating a specific E2 service model (E2SM).

In embodiments, an electronic device of a Near-real time (RT) radio access network (RAN) intelligent controller (Near-RT RIC) is provided. The electronic device may comprise at least one transceiver and at least one processor. The at least one processor may be configured to cause the Near-RT RIC to transmit a RIC service query message to an E2 node through the at least one transceiver, and receive a RIC service update message from the E2 node through the at least one transceiver. The RIC service query message may include a message type, a transaction identifier (ID), and a list of RAN functions previously accepted by the Near-RT RIC. The list of RAN functions may include, for each RAN function, a RAN function ID, a RAN function revision, and a RAN function object identifier (OID) indicating a specific E2 service model (E2SM).

In embodiments, a non-transitory computer-readable storage medium is provided. The non-transitory computer-readable storage medium may comprise instructions that, when executed by a processor, cause an E2 node to perform operations comprising receiving a RIC service query message from a Near-real time (RT) radio access network (RAN) intelligent controller (Near-RT RIC), and, in response to the RIC service query message, transmitting a RIC service update message to the Near-RT RIC. The RIC service query message may include a message type, a transaction identifier (ID), and a list of RAN functions previously accepted by the Near-RT RIC. The list of RAN functions may include, for each RAN function, a RAN function ID, a RAN function revision, and a RAN function object identifier (OID) indicating a specific E2 service model (E2SM).

In embodiments, a non-transitory computer-readable storage medium is provided. The non-transitory computer-readable storage medium may include instructions that, when executed by a processor, cause a Near-real time (RT) radio access network (RAN) intelligent controller (Near-RT RIC) to perform operations comprising transmitting a RIC service query message to an E2 node, and receiving a RIC service update message from the E2 node. The RIC service query message may include a message type, a transaction identifier (ID), and a list of RAN functions previously accepted by the Near-RT RIC. The list of RAN functions may include, for each RAN function, a RAN function ID, a RAN function revision, and a RAN function object identifier (OID) indicating a specific E2 service model (E2SM).

### [Description of the Drawings]

FIG. 1 illustrates an example of a core network of a 4^{th} generation (4G) long term evolution (LTE) communication system.
FIG. 2 illustrates an example of a core network of a 5^{th} generation (5G) communication system.
FIG. 3 illustrates an example of an architecture for O-RAN.
FIG. 4A illustrates an example of a connection between an E2 node and a radio access network intelligence controller (RIC) in a 5G communication system.
FIG. 4B illustrates a protocol stack of an E2 application protocol message.
FIG. 5 illustrates a configuration of an electronic device in a radio access network.
FIG. 6 illustrates a logical function related to an E2 message of an E2 node and a RIC in a radio access network.
FIG. 7 illustrates examples of a functional split between an E2 node and a RIC.
FIG. 8 illustrates an implementation example of an E2 node and a RIC.
FIG. 9 illustrates examples of a functional split between a central unit (CU) and a RIC.
FIG. 10 illustrates examples of RAN functions for each E2 node.
FIGS. 11A and 11B illustrate signal flows for a RIC service update procedure.
FIG. 12 illustrates an example of resolving an error in a Near-RT RIC through a RIC service update procedure.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to a signal (e.g., signal, information, message, signaling), terms referring to a data type (e.g., list, set, subset), terms for an operation state (e.g., step, operation, procedure), terms referring to data (e.g., packet, user stream, information, bit, symbol, codeword), terms referring to a resource (e.g., symbol, slot, subframe, radio frame, subcarrier, resource element (RE), resource block (RB), bandwidth part (BWP), occasion), terms referring to a channel, terms referring to network entities, terms referring to a component of a device, and the like, used in the following description, are exemplified for convenience of description. Accordingly, the present disclosure is not limited to the terms to be described below, and another term having an equivalent technical meaning may be used.

Terms referring to a configuration (e.g., setup, setting, arrangement, control), terms referring to a signal (e.g., packet, message, signal, information, signaling), terms referring to a resource (e.g., section, symbol, slot, subframe, radio frame, subcarrier, resource element (RE), resource block (RB), bandwidth part (BWP), occasion), terms for an operation state (e.g., step, operation, procedure), terms referring to data (e.g., packet, message, user stream, information, bit, symbol, codeword), terms referring to a channel, terms referring to network entities (e.g., distributed unit (DU), radio unit (RU), central unit (CU), CU-control plane (CP), CU-user plane (UP), open radio access network (O-RAN) DU (O-DU), O-RAN RU (O-RU), O-RAN CU (O-CU), O-RAN CU-CP (O-CU-UP), O-RAN CU-CP (O-CU-CP)), terms referring to a component of a device, and the like, used in the following description, are exemplified for convenience of description. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes various embodiments using terms used in some communication standards (e.g., 3rd Generation Partnership Project (3GPP), European Telecommunications Standards Institute (ETSI), an extensible radio access network (xRAN), and an open-radio access network (O-RAN)), but this is merely an example for description. Various embodiments of the present disclosure may be easily modified and applied in another communication system.

As 4^{th} generation (4G)/5^{th} generation (5G) communication systems (e.g., a new radio (NR)) have been commercialized, differentiated service support for a user in a virtualized network has been required. The 3GPP, which is a joint research project among organizations related to mobile communication, aims to prepare a standard for a third generation mobile communication system-which is applicable worldwide-within a scope of the IMT-2000 project of the International Telecommunication Union (ITU). The 3GPP was established in December 1998, and the 3GPP standard is based on an advanced GSM standard and includes all of radio, a core network, and a service architecture in a standardization scope. Accordingly, an open radio access network (O-RAN) newly defines a 3GPP network entity (NE) and a radio unit (RU), a digital unit (DU), a central unit (CU)-control plane (CP), and a CU-user plane (UP), which are nodes configuring a base station, as an O (O-RAN)-RU, an O-DU, an O-CU-CP, and an O-CU-UP, respectively, and additionally standardizes a near-real-time (NRT) radio access network intelligent controller (RIC). The present disclosure is for supporting an operator specific service model in an E2 interface in which the RIC requests a service from the O-DU, the O-CU-CP, or the O-CU-UP. Here, the O-RU, the O-DU, the O-CU-CP, and the O-CU-UP may be understood as entities configuring a RAN that may operate according to an O-RAN standard, and may be referred to as E2 nodes. An interface between the RIC and the E2 nodes with entities configuring the RAN, which may operate according to the O-RAN standard, uses an application protocol (E2AP).

The RIC is a logical node capable of collecting information related to the RAN. For example, the information related to the RAN may include information related to a cell site in which the terminal and the E2 node (e.g., the O-DU, the O-CU-CP, or the O-CU-UP) transmit and receive. The RIC may be implemented in a form of a server centrally disposed at one physical location. For example, a connection may be made through the Ethernet between the O-DU and the RIC, between the O-CU-CP and the RIC, and between the O-CU-UP and the RIC. For this, an interface standard for communication between the O-DU and the RIC, between the O-CU-CP and the RIC, and between the O-CU-UP and the RIC has become necessary, and a definition of message standards such as an E2-DU, an E2-CU-CP, and an E2-CU-UP and procedures between the O-DU, the O-CU-CP, and the O-CU-UP and the RIC is required. In particular, differentiated service support for a user in a virtualized network is required. By concentrating a call processing message/function generated in O-RAN on the RIC, a function definition of a message of the E2-DU, the E2-CU-CP, and the E2-CU-UP for supporting a service for wide cell coverage is required.

The RIC may perform communication with the E2 node (e.g., the O-DU, the O-CU-CP, and/or the O-CU-UP) using the E2 interface. For example, the RIC may set an event occurrence condition through a subscription procedure with the E2 node. The RIC may set a call processing event by generating a subscription Request message and delivering the E2 subscription request message to the E2 node. After the call processing event is set, the E2 node may deliver a subscription response message to the RIC. The E2 node may establish services provided by the Near-RT RIC. For example, the E2 node may transmit a RIC indication message (e.g., report information) to the RIC according to the subscription procedure. For example, the RIC may provide control for the E2 node (e.g., the O-DU, the O-CU-CP, or the O-CU-UP) using a RIC control message.

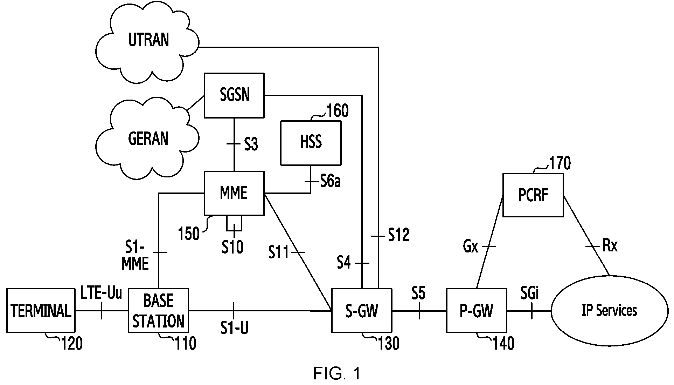

FIG. 1 illustrates an example of a core network of a 4^{th} generation (4G) long term evolution (LTE) communication system.

Referring to FIG. 1, the LTE communication system may include a base station 110, a terminal 120, a serving gateway (S-GW) 130, a packet data network gateway (P-GW) 140, a mobility management entity (MME) 150, a home subscriber server (HSS) 160, and a policy and charging rule function (PCRF) 170.

The base station 110 is a network infrastructure that provides wireless access to the terminal 120. For example, the base station 110 is a device that performs scheduling by collecting state information, such as a buffer state, available transmission power, and a channel state of the terminal 120. The base station 110 has coverage defined as a certain geographical region based on a distance at which a signal may be transmitted. The base station 110 is connected to the MME 150 through an S1-MME interface. In addition to a base station, the base station 110 may be referred to as an 'access point (AP)', an 'eNodeB (eNB)', a 'wireless point', a 'transmission/reception point (TRP)', a RAN node, or another term having an equivalent technical meaning.

The terminal 120 is a device used by a user and performs communication with the base station 110 through a wireless channel. In some cases, the terminal 120 may be operated without involvement of the user. That is, the terminal 120 is a device that performs machine type communication (MTC) and may not be carried by the user. In addition to a terminal, the terminal 120 may be referred to as 'user equipment (UE)', a 'mobile station', a 'subscriber station', 'customer-premises equipment (CPE)', a 'remote terminal', a 'wireless terminal', a 'user device', or another term having an equivalent technical meaning.

The S-GW 130 provides a data bearer, and generates or controls the data bearer according to control of the MME 150. For example, the S-GW 130 processes a packet arriving from the base station 110 or a packet to be forwarded to the base station 110. In addition, the S-GW 130 may perform an anchoring role during handover of the terminal 120 between base stations. The P-GW 140 may function as a connection point with an external network (e.g., an Internet network). In addition, the P-GW 140 assigns an Internet Protocol (IP) address to the terminal 120 and performs an anchoring role for the S-GW 130. In addition, the P-GW 140 may apply a quality of service (QoS) policy of the terminal 120 and manage account data.

The MME 150 manages mobility of the terminal 120. In addition, the MME 150 may perform authentication for the terminal 120, bearer management, and the like. That is, the MME 150 is responsible for mobility management and various control functions for the terminal. The MME 150 may link with a serving GPRS support node (SGSN).

The HSS 160 stores key information and a subscriber profile for authentication of the terminal 120. The key information and the subscriber profile are delivered from the HSS 160 to the MME 150 when the terminal 120 accesses a network.

The PCRF 170 defines a rule for policy and charging. The stored information is delivered from the PCRF 180 to the P-GW 140, and the P-GW 140 may perform control (e.g., QoS management, charging, and the like) for the terminal 120 based on the information provided from the PCRF 180.

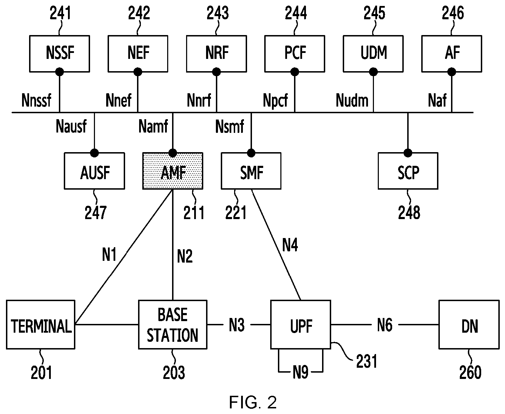

FIG. 2 illustrates an example of a core network of a 5^{th} generation (5G) communication system.

Referring to FIG. 2, the 5G communication system may include a terminal 201, a base station 203, an access and mobility management function (AMF) 211, a session management function (SMF) 221, and a user plane function (UPF) 231. For the terminal 201, descriptions of the terminal 120 of FIG. 1 may be referred to. For the base station 203, a description of the base station 110 may be referred to. The base station 203 may be connected to the AMF 211 through an N2 interface and connected to the UPF 231 through an N3 interface. In addition to a base station, the base station 203 may be referred to as an 'access point (AP)', a 'radio access network (RAN) node', a '5th generation (5G) node', a 'next generation nodeB (gNB)', a 'wireless point', a 'transmission/reception point (TRP)', a 'communication node', a 'wireless communication device', 'wireless communication equipment', a 'network node', a 'network entity', or another term having an equivalent technical meaning. The AMF 211 may provide a function related to mobility management of the terminal 201, registration of a user, authentication, connection establishment, and/or release. The SMF 221 may manage a session and service quality (e.g., quality of service (QoS)) of the terminal 120 in a user plane, and generate and manage a PDU session tunnel using GPT tunneling between the UPF 231 and the base station 203. The UPF 231 may perform a role of processing and routing a user data packet, and provide appropriate processing through classification and prioritization of traffic as necessary. In addition, the UPF 231 may transmit packets through an Internet network by being connected to a data network 260.

A network between the terminal 201 and the base station 203 may be referred to as an access network or a RAN. A set of network entities connected to the base station 203 may be referred to as a 5G core network. The 5G core network may include various network functions (NFs), in addition to the AMF 211, the SMF 221, and the UPF 223. For example, the 5G core network may include a network slice selection function (NSSF) 241, a network exposure function (NEF) 242, a network repository function (NRF) 243, a policy control function (PCF) 244, unified data management (UDM) 245, an application function (AF) 246, an authentication server function (AUSF) 247, and/or a service capability exposure function (SCP) 248. The NSSF 241 may provide selection of a network slice suitable for a user (e.g., the terminal 201). The NEF 242 may provide implementation of a service by allowing a service provider to access a network resource and a network function. The NRF 243 may perform a role of a database capable of searching for and finding a service and a function in a network. The PCF 244 may manage and control service quality and a policy in the network. The UDM 245 may manage and provide a profile and subscription information of the user. The AF 246 may manage network access and resource allocation for a specific service or application. The AUSF 247 may manage authentication information of the user and perform an authentication procedure. The SCP 248 may expose a service function of the network to an external application and support provision of a service.

A base station (e.g., the base station 203) may be implemented in a distributed deployment according to a central unit (CU) (or a control unit) configured to perform functions (e.g., packet data convergence protocol (PDCP) and radio resource control (RRC)) of an upper layer of an access network and a distributed unit (DU) configured to perform a function of a lower layer. For example, between a core network (e.g., a 5G core (5GC) or a next generation core (NGC)) and a radio network (RAN), the base station may be implemented in a structure in which a CU and a DU are disposed in order (or a CU, a DU, and an RU are disposed in order). An interface between the CU and the DU may be referred to as an F1 interface. The CU may be responsible for a function of a layer higher than the DU by being connected to one or more DUs. For example, the CU may be responsible for functions of a radio resource control (RRC) layer and functions of a packet data convergence protocol (PDCP) layer, and the DU (or the DU and the RU) may be responsible for a function of a lower layer. The DU may perform functions of a radio link control (RLC) layer, functions of a media access control (MAC) layer, and functions of a physical (PHY) layer. As a non-limiting example, if the DU is connected to a radio unit (RU), the DU may perform a portion of functions (high PHY) among the functions of the physical layer, and the RU may be responsible for remaining functions (low PHY) of the PHY layer.

Carrier aggregation (hereinafter, 'CA') technology is a technology for increasing frequency utilization efficiency from a perspective of a terminal or a base station by combining a plurality of component carriers and by one terminal simultaneously using such a plurality of component carriers to transmit and receive signals. Specifically, according to the CA technology, the terminal (e.g., the terminal 120 or the terminal 201) and the base station (e.g., the base station 110 or the base station 203) may transmit and receive signals using a wideband by using a plurality of component carriers in an uplink (UL) and a downlink (DL), respectively, and, at this time, each component carrier is located in a different frequency band. Hereinafter, the uplink means a communication link through which the terminal transmits a signal to the base station, and the downlink means a communication link through which the base station transmits a signal to the terminal. At this time, the number of uplink component carriers and the number of downlink component carriers may be different from each other.

Dual connectivity or multi connectivity technology is a technology for increasing frequency utilization efficiency from a perspective of a terminal or a base station by one terminal being connected to a plurality of different base stations and by simultaneously using carriers in each of the plurality of base stations located in different frequency bands to transmit and receive signals. The terminal may transmit and receive traffic by being simultaneously connected to a first base station (e.g., a base station providing a service using LTE technology or fourth generation mobile communication technology) (e.g., the base station 110) and a second base station (e.g., a base station providing a service using new radio (NR) technology or 5^{th} generation (5G) mobile communication technology) (e.g., the base station 203). At this time, frequency resources used by each base station may be located in different bands. For example, a scheme operating based on a dual connectivity scheme of LTE and NR based on an LTE core network (e.g., an evolved packet core (EPC)) may be referred to as 5G non-standalone (NSA). For example, in the 5G communication system, a scheme operating through 5G technology (or LTE technology and 5G technology) based on the 5G core network may be referred to as 5G standalone (SA).

Currently, considering services that 5G mobile communication technology intended to support, discussions for improvement of initial 5G mobile communication technology and performance enhancement are in progress, and physical layer standardization is in progress for technologies such as Vehicle-to-Everything (V2X) for helping a driving determination of an autonomous vehicle and increasing convenience of a user based on its own location and state information transmitted by a vehicle, New Radio Unlicensed (NR-U) aimed at system operation satisfying various regulatory requirements in an unlicensed band, NR terminal low power consumption technology (UE Power Saving), a non-terrestrial network (NTN), which is direct terminal-satellite communication for securing coverage in an area in which communication with a terrestrial network is impossible, and positioning.

In addition, standardization in a radio interface architecture/protocol field is also in progress for technologies such as an intelligent factory (Industrial Internet of Things (IIoT)) for supporting a new service through linkage and convergence with another industry, Integrated Access and Backhaul (IAB) providing a node for expansion of a network service area by integrally supporting a wireless backhaul link and an access link, mobility enhancement technology (Mobility Enhancement) including Conditional Handover and Dual Active Protocol Stack (DAPS) handover, and 2-step random access (2-step RACH for NR) simplifying a random access procedure, and standardization in a system architecture/service field is also in progress for a 5G baseline architecture (e.g., Service based Architecture and Service based Interface) for application of Network Functions Virtualization (NFV) and Software-Defined Networking (SDN) technologies, mobile edge computing (MEC) through which a service is provided based on a location of a terminal, and the like.

When such a 5G mobile communication system is commercialized, connected devices, which are explosively increasing, will be connected to a communication network, and accordingly, enhancement of functions and performance of the 5G mobile communication system and integrated operation of the connected devices are expected to be necessary. For this, new research will be conducted on extended reality (XR) for efficiently supporting augmented reality (AR), virtual reality (VR), mixed reality (MR), and the like, 5G performance improvement and complexity reduction using artificial intelligence (AI) and machine learning (ML), AI service support, metaverse service support, drone communication, and the like.

In addition, such development of the 5G mobile communication system may become a basis for development of a new waveform for ensuring coverage in a terahertz band of 6G mobile communication technology, multiple antenna transmission technologies such as full dimensional MIMO (FD-MIMO), an array antenna, and a large scale antenna, a metamaterial-based lens and antenna for improving coverage of a terahertz band signal, high-dimensional spatial multiplexing technology using orbital angular momentum (OAM), and reconfigurable intelligent surface (RIS) technology, as well as full duplex technology for improving frequency efficiency and a system network of the 6G mobile communication technology, AI-based communication technology for realizing system optimization by utilizing a satellite and artificial intelligence (AI) from a design stage and internalizing an end-to-end AI support function, and next-generation distributed computing technology for realizing a service having complexity exceeding a limitation of terminal computing capability by utilizing ultra-high-performance communication and computing resources.

Although FIGS. 1 to 2 have been described as examples in a 4G and/or 5G environment, these descriptions do not limit a scope of a communication environment of embodiments of the present disclosure. A technical principle according to embodiments of the present disclosure may also be applied to communication technologies and network environments of 6G and beyond 6G.

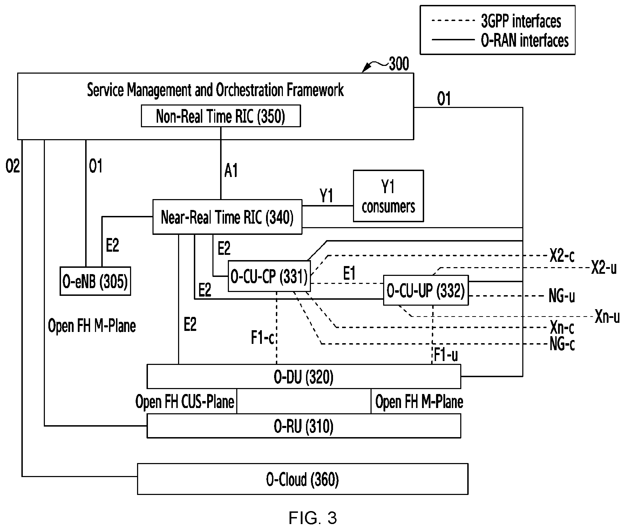

FIG. 3 illustrates an example of an architecture for O-RAN.

Referring to FIG. 3, a logical architecture of the O-RAN may include a service management orchestration (SMO) 300, an O-eNB 305, an O-RU 310, an O-DU 320, an O-CU-CP 331, an O-CU-UP 332, a Near-RT RIC 340, and a Non-RT RIC 350.

Among various management domains (e.g., RAN management, core management, transport management, and end-to-end (E2E) slice management) in a network of a service provider, the SMO 300 may be responsible for the RAN management. For the RAN management, the SMO 300 may provide a fault, configuration, accounting, performance, and security (FCAPS) interface and RAN optimization using the Non-RT RIC 350.

The O-eNB 305 may be a node providing an access network in an LTE communication system. For the O-eNB 305, descriptions of the base station 110 of FIG. 1 may be referred to. The O-RU 310, the O-DU 320, the O-CU-CP 331, and the O-CU-UP 332 may be network entities (or nodes) for providing an access network in an NR communication system. For the O-RU 310, the O-DU 320, the O-CU-CP 331, and the O-CU-UP 332, descriptions of the base station 203 of FIG. 2 may be referred to.

The Near-RT RIC 340 is a logical node for customizing RAN functionality for a new service or regional resource optimization. The Near-RT RIC 340 may provide functions such as network intelligence (e.g., policy enforcement and handover optimization), resource assurance (e.g., radio-link management and an advanced self-organized-network (SON)), and resource control (e.g., load balancing and a slicing policy). The Near-RT RIC 340 may be connected to the O-eNB 305, the O-CU-CP 331, the O-CU-UP 332, and/or the O-DU 320. The Near-RT RIC 340 may perform communication with the O-eNB 305, the O-CU-CP 331, the O-CU-UP 332, and/or the O-DU 320. The RIC 340 may be connected to each node through an E2 interface. In addition, an interface between the O-CU-CP 331 and the O-DU 320 may be referred to as an F1-c interface. An interface between the O-CU-UP 332 and the O-DU 320 may be referred to as an F1-u interface. In the following description, a DU and an O-DU, a CU-CP and an O-CU-CP, and a CU-UP and an O-CU-UP may be interchangeably used.

The Non-RT RIC 350 may perform communication with the Near-RT RIC 340 through an A1 interface by being implemented in the SMO 300. Through the A1 interface, a policy management service, an enrichment information service, and a machine learning (ML) model management service may be provided. The Non-RT RIC 350 may drive content delivered through the A1 interface.

The O-Cloud 360 is a cloud computing platform composed of a set of physical infrastructure nodes satisfying O-RAN requirements for hosting related O-RAN functions (e.g., the Near-RT RIC 340, the O-CU-CP 331, the O-CU-UP 332, and the O-DU 320), supporting software components (e.g., an operating system, a virtual machine monitor, a container runtime, and the like), and/or appropriate management and orchestration functions.

In FIG. 3, the O-CU-CP 331 and the O-CU-UP 332 are respectively illustrated according to a split of a control plane and a user plane, but embodiments of the present disclosure are not limited thereto. As a non-limiting example, the O-CU-CP 331 and the O-CU-UP 332 may be understood as one O-CU 330. In addition, FIG. 3 illustrates one Near-RT RIC 340, but, according to various embodiments, a plurality of Near-RT RICs may exist for an O-RAN architecture. The plurality of Near-RT RICs may be implemented as a plurality of hardware located at the same physical location or may be implemented through virtualization using one hardware.

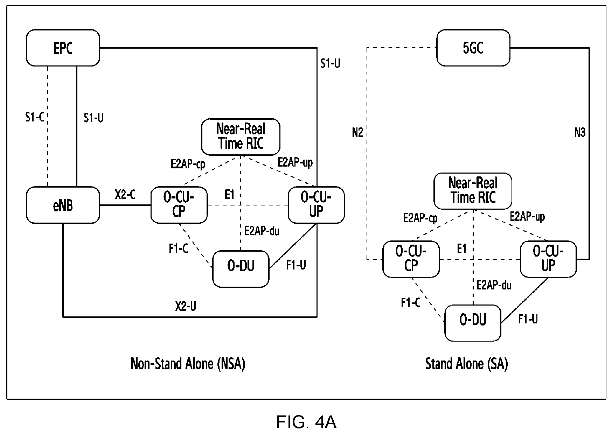

FIG. 4A illustrates an example of a connection between an E2 node and a radio access network intelligence controller (RIC) in a 5G communication system.

Referring to FIG. 4A, the 5G communication system may provide deployment of entities according to a non-standalone mode (e.g., non-standalone (NSA)) or a standalone mode (e.g., standalone (SA)). Network entities configuring a base station (e.g., the base station 110 or the base station 203) may be referred to as E2 nodes, and each network entity may have deployments according to the non-standalone mode or may have deployment according to the standalone mode. For example, in the non-standalone mode, dual connectivity using an eNB and the E2 node may be provided to a terminal. Such dual connectivity using LTE and NR may be referred to as evolved universal terrestrial radio access (E-UTRA)-NR dual connectivity (EN-DC). A CU-CP, a CU-UP, and a DU for operating as a gNB may be referred to as an O-CU-CP 331, an O-CU-UP 332, and an O-DU 320, respectively, by being connected to a Near-RT RIC (e.g., the Near-RT RIC 340) in an O-RAN architecture. For example, in the standalone mode, the E2 nodes may be independently connected to a 5GC. The E2 nodes may be referred to as the O-CU-CP 331, the O-CU-UP 332, and/or the O-DU 320 in the O-RAN architecture. The O-CU-CP 331 may be connected to an AMF (e.g., the AMF 211) in the 5GC through an N2 interface. The O-CU-UP 332 may be connected to a UPF (e.g., the UPF 231) in the 5GC through an N3 interface.

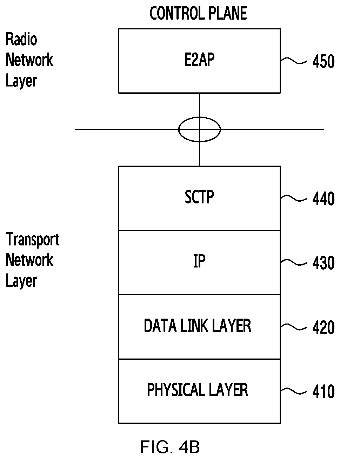

FIG. 4B illustrates a protocol stack of an E2 application protocol message.

Referring to FIG. 4B, a control plane includes a transport network layer and a radio network layer. The transport network layer includes a physical layer 410, a data link layer 420, an internet protocol (IP) 430, and a stream control transmission protocol (SCTP) 440.

The radio network layer includes an E2AP 450. The E2AP 450 is used to deliver a subscription message, an indication message, a control message, a service update message, and a service query message, and is transmitted at a higher layer of the SCTP 440 and the IP 430.

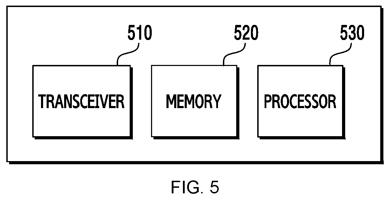

FIG. 5 illustrates a configuration of an electronic device in a radio access network. The structure illustrated in FIG. 5 may be understood as a configuration of an electronic device having a function of at least one of the Near-RT RIC 340, the Non-RT RIC 350, the O-CU-CP 331, the O-CU-UP 332, the O-DU 320, and/or the O-eNB 305 illustrated through FIG. 3. Terms such as '...unit' and '...device' used below mean a unit that processes at least one function or operation, and may be implemented as hardware or software, or a combination of hardware and software.

Referring to FIG. 5, the electronic device may include a transceiver 510, memory 520, and a processor 530.

The transceiver 510 provides an interface for performing communication with other electronic devices in a network. That is, the transceiver 510 converts a bit stream transmitted from the electronic device to another electronic device into a physical signal, and converts the physical signal received from the another electronic device into a bit stream. That is, the transceiver 510 may transmit or receive a signal. Accordingly, the transceiver 510 may be referred to as a modem, a communication unit, a transmit unit, a receive unit, or a transmit/receive unit. At this time, the transceiver 510 enables the electronic device to communicate with other electronic devices or a system through a backhaul connection (e.g., a wired backhaul or a wireless backhaul) or through a network. The transceiver 510 may include one or more transceivers.

The memory 520 stores data such as a basic program, an application program, and setting information for an operation of the electronic device. The memory 520 may be configured of a volatile memory, a non-volatile memory, or a combination of the volatile memory and the non-volatile memory. In addition, the memory 520 provides stored data according to a request of the processor 530. The memory 520 may be referred to as a storage unit.

The processor 530 controls overall operations of the electronic device. For example, the processor 530 transmits and receives a signal through the transceiver 510. In addition, the processor 530 records data in and reads data from the memory 520. The processor 530 may be referred to as a controller. For this, the processor 530 may be configured with a plurality of processors or may include at least one sub-processor. According to various embodiments, the processor 530 may control the electronic device to perform operations according to various embodiments described in the present disclosure.

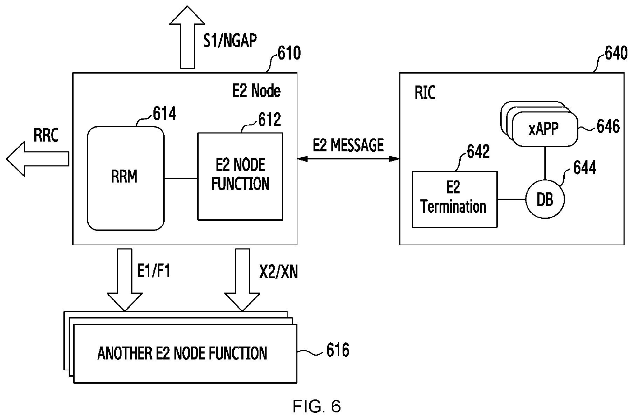

FIG. 6 illustrates a logical function related to an E2 message of an E2 node and a RIC in a radio access network.

Referring to FIG. 6, a RIC 640 and an E2 node 610 may transmit or receive an E2 message to or from each other. For example, the E2 node 610 may be an O-eNB 305, an O-CU-CP 331, an O-CU-UP 332, an O-DU 320, or a base station (e.g., the base station 101 or the base station 203). A communication interface of the E2 node 620 may be determined according to a type of the E2 node 610. For example, the E2 node 610 may perform communication with another E2 node 616 through an E1 interface or an F1 interface. Alternatively, for example, the E2 node 610 may perform communication with the another E2 node 616 through an X2 interface or an XN interface. Alternatively, for example, the E2 node 610 may perform communication with a core network entity through an S1 interface or a next generation application protocol (NGAP) interface (e.g., an interface between the next generation (NG) base station 203 and the AMF 211).

The E2 node 610 may include an E2 node function 612. The E2 node function 612 is a function corresponding to specific application S/W (xApp) 646 installed in the RIC 640. For example, in a case of a KPI monitor, KPI monitor collection S/W is installed in the RIC 640, and the E2 node 610 may include the E2 node function 612 that generates KPI parameters and then delivers an E2 message including a KPI parameter to an E2 termination 642 located in the RIC 640. The E2 node 610 may include radio resource management (RRM) 614. The E2 node 610 may manage resources provided to a radio network for a terminal.

The E2 termination 642 located in the RIC 640, which is a termination of the RIC 640 for the E2 message, performs a function of interpreting the E2 message delivered by the E2 node 610 and then delivering the E2 message to the xApp 646. A database (DB) 644 located in the RIC 640 may be used for the E2 termination 624 or the xApp 646.

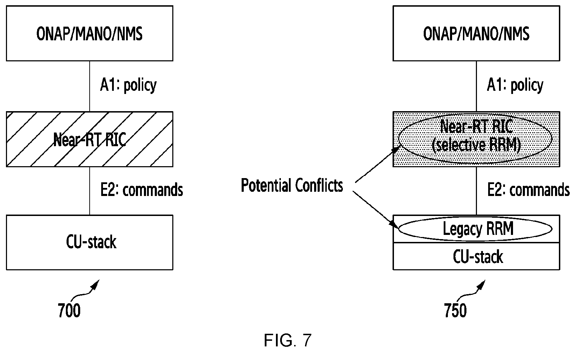

FIG. 7 illustrates examples of a functional split between an E2 node (e.g., the O-eNB 305, the O-CU-CP 331, the O-CU-UP 332, the O-DU 320, or a base station (e.g., the base station 101 or the base station 203)) and a RIC. A RAN standard may provide a functional split between the E2 node and the RIC. For example, the E2 node may be a CU (e.g., the CU 330, the CU-CP 331, or the CU-UP 332). The RIC may be a Near RT RIC 340. The Near RT RIC 340 may be connected to an SMO 300 (e.g., an open network automation platform (ONAP)/management and orchestration (MANO)/a network management system (NMS)) through an A1 interface. For example, the Near RT RIC 340 may be connected to a Non-RT RIC 350 of the SMO 300. The RIC may be connected to the E2 node through an E2 interface. Possible functional split options may include a functional split 700 in which the entire radio resource management (RRM) is managed in the Near-RT RIC 340 and a functional split 750 in which the RRM is selectively managed in the Near-RT RIC 340.

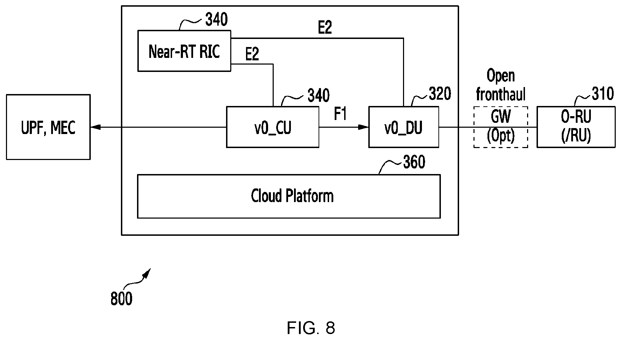

FIG. 8 illustrates an implementation example of an E2 node and a RIC. In a scenario of an implementation example 800, the E2 node (e.g., the O-eNB 305, the O-DU 320, the O-CU 330, the O-CU-CP 331, or the O-CU-UP 332) and the RIC (e.g., the Near-RT RIC 340) may be configured in a device (e.g., a server) by being virtualized in a cloud platform (e.g., an open chassis and blade specification edge cloud). This scenario may provide latency sufficiently low to satisfy an O-DU latency requirement. This scenario may support deployment in a dense urban region with abundant fronthaul capacity allowing a base band unit (BBU) function to be pooled at a central location. Accordingly, it may not be necessary to attempt to centralize a RIC close to real time (RT) beyond a limit at which an O-DU function may be centralized.

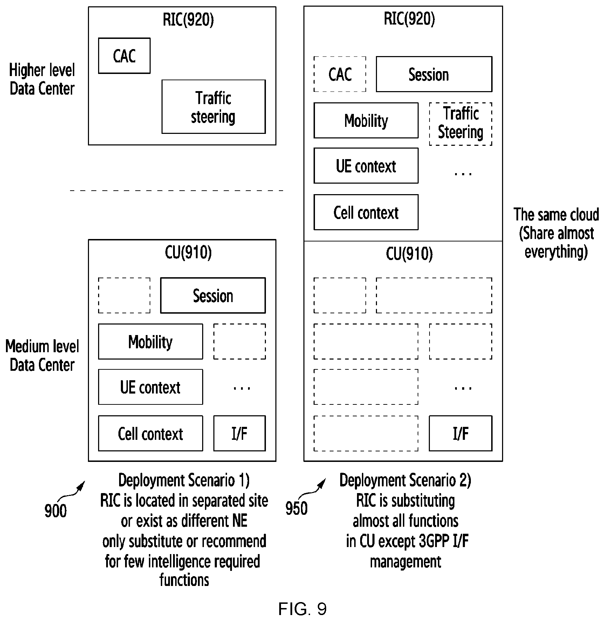

FIG. 9 illustrates examples of a functional split between a central unit (CU) and a RIC.

Referring to FIG. 9, functions for a central unit (CU) 910 (e.g., the O-CU 330, the O-CU-CP 331, or the O-CU-UP 332) and a RIC 920 (e.g., the Near-RT RIC 340) may be split or implemented jointly. According to deployment of the functions, a deployment scenario may be determined. For example, the functions may be distributed according to a deployment scenario #1 900. It may be configured to replace only at least one intelligence-required function (e.g., a traffic steering function or a cell admission control (CAC) function). In the deployment scenario #1 900, the RIC 920 may be located at a separate site or may exist only as another NE. For another example, the functions may be distributed according to a deployment scenario #2 950. In the deployment scenario #2 950, the RIC 920 may replace almost all functions of the CU 910 (e.g., a mobility function, a session function, a UE context function, and a cell context function), except for 3GPP I/F management. In the deployment scenario #2 950, the RIC 920 may be implemented as the same device (e.g., a server device) as the CU 910. For example, in the same cloud, the RIC 920 may share all the functions with the CU 910.

FIG. 9 illustrates two scenarios, but other scenarios may be applied. For example, in the deployment scenario #1 900, a mobility function may be performed by the RIC 920 rather than by the CU 910. In addition, for example, in the deployment scenario #1 900, a UE context function may be performed by the RIC 920 rather than by the CU 910. In addition, for example, in the deployment scenario #1 900, a session function may be performed by the RIC 920 rather than by the CU 910.

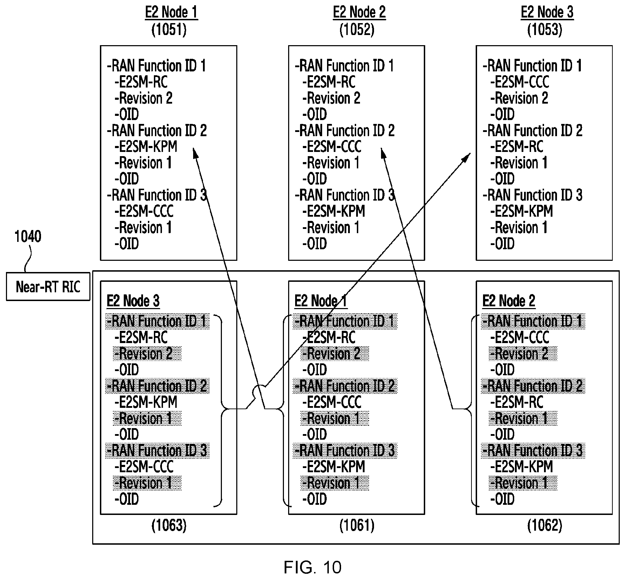

FIG. 10 illustrates examples of RAN functions for each E2 node. In an O-RAN, a RAN function indicates a specific function at an E2 node. For example, the RAN function may include RAN internal functions for handling UEs and/or cells. A RAN function identifier (ID) indicates a logical identifier of a specific RAN function within the E2 node supporting one or more RIC services using a specific E2 service model (E2SM). A RAN function object identifier (OID) indicates a type of the E2SM and may be used to identify a definition of the RAN function. The RAN function ID is not a unique value for the RAN function, but indicates an index for indicating the RAN function at a corresponding E2 node. In actuality, even in a case of the same RAN function, E2 nodes may map the corresponding RAN function to different RAN function IDs. In addition, even in a case of the same RAN function ID, the E2 nodes may map different RAN functions to the corresponding RAN function ID. Accordingly, in order to know information on an actual RAN function, a RAN function definition or the RAN function OID, in addition to the RAN function ID, may be required.

Referring to FIG. 10, each E2 node (e.g., a first E2 node 1051, a second E2 node 1052, or a third E2 node 1053) may provide the Near-RT RIC 1040 (e.g., the Near-RT RIC 340) with information on the RAN function through an E2 setup procedure with the Near-RT RIC 1040. For example, the E2 node may transmit an E2 setup request message to the Near-RT RIC 1040. The E2 setup request message may include information on one or more RAN functions. The Near-RT RIC 1040 may transmit, to a corresponding E2 node through an E2 setup response message, information on at least one accepted RAN function among the one or more RAN functions. In this manner, the Near-RT RIC 1040 may store the information on the RAN function at each E2 node.

The Near-RT RIC 1040 may be connected to E2 nodes (e.g., the first E2 node 1051, the second E2 node 1052, and the third E2 node 1053). For example, the first E2 node 1051 may store three RAN functions. The first E2 node 1051 may store E2SM-RC, Revision 2, and an OID for a RAN function ID #1. The OID may indicate the E2SM-RC. The Revision 2 indicates a revision counter of the corresponding RAN function. The first E2 node 1051 may store E2SM-KPM, Revision 1, and an OID for a RAN function ID #2. The OID may indicate the E2SM-KPM. The first E2 node 1051 may store E2SM-CCC, Revision 1, and an OID for a RAN function ID #3. The OID may indicate the E2SM-CCC. For example, the second E2 node 1052 may store three RAN functions. The second E2 node 1052 may store E2SM-RC, Revision 2, and an OID for RAN function ID #1. The OID may indicate E2SM-RC. The second E2 node 1052 may store E2SM-CCC, Revision 1, and an OID for RAN function ID #2. The OID may indicate E2SM-CCC. The second E2 node 1052 may store E2SM-KPM, Revision 1, and an OID for RAN function ID #3. The OID may indicate E2SM-KPM. For example, the third E2 node 1053 may store three RAN functions. The third E2 node 1053 may store E2SM-CCC, Revision 2, and an OID for a RAN function ID #1. The OID may indicate the E2SM-CCC. The third E2 node 1053 may store E2SM-RC, Revision 1, and an OID for a RAN function ID #2. The OID may indicate the E2SM-RC. The third E2 node 1053 may store E2SM-KPM, Revision 1, and an OID for a RAN function ID #3. The OID may indicate the E2SM-KPM.

The Near-RT RIC 1040 is required to store the same information as the RAN function IDs stored in each E2 node and related information (e.g., an OID, a Revision, or a service model) corresponding to the corresponding RAN function ID. However, in a case that there is a problem with a connection state while a series of procedures (e.g., the E2 setup procedure) between the Near-RT RIC 1040 and the E2 node are performed, or an error occurs in a database within the Near-RT RIC 1040, the Near-RT RIC 1040 may store information on RAN functions for each E2 node differently from an actual configuration. For example, the Near-RT RIC 1040 may associate information indicating the E2 node (e.g., an E2 node index or an E2 node component ID) with another E2 node rather than the E2 node. In other words, an error may occur in an E2 node index stored in the Near-RT RIC 1040. The Near-RT RIC 1040 may store a RAN function profile for the first E2 node 1051 in a RAN function profile 1063 for the third E2 node 1053. The Near-RT RIC 1040 may store a RAN function profile for the second E2 node 1052 in a RAN function profile 1061 for the first E2 node 1051. The Near-RT RIC 1040 may store a RAN function profile for the third E2 node 1053 in a RAN function profile 1062 for the second E2 node 1052.

In the above-described situation, the Near-RT RIC 1040 may perform a RIC service update procedure with the third E2 node 1053. The Near-RT RIC 1040 may transmit a RIC service query message to the third E2 node 1053. The RIC service query message defined in the current standard is as follows.

**[Table 1]**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3 | | YES | reject |
| Transaction ID | M | | 9.2.33 | | YES | reject |
| **RAN Functions Accepted List** | | *0..1* | | Complete list of Functions previously accepted by Near-RT RIC | | |
| >RAN Functions ID Item | | *1 .. <maxofRANfunctíonID*> | | | YES | reject |
| >>RAN Function ID | M | | 9.2.8 | Id of the declared Function | - | |
| >>RAN Function Revision | M | | 9.2.24 | Revision counter | - | |

For 'IE type and reference', the O-RAN WG3 E2AP standard may be referred to. 'M' (mandatory) indicates that a corresponding IE is mandatorily included, and 'O' (optional) indicates that a corresponding IE is optionally included. 'Message Type' indicates a message type (e.g., an initiating message, a successful outcome, or an unsuccessful outcome), and 'Transaction ID' may be used to uniquely identify a corresponding procedure (e.g., the RIC service update procedure) among parallel ongoing procedures of the same type. 'RAN Functions Accepted List' indicates a list of all RAN functions accepted by the Near-RT RIC 1040. 'RAN Functions ID Item' indicates a RAN function ID ('RAN Function ID') and a RAN function revision ('RAN Function Revision') for each RAN function. The RAN function revision indicates a revision counter (or updated version information or the number of updates) for a corresponding RAN function.

The Near-RT RIC 1040 may transmit, to the third E2 node 1053, the RIC service query message according to Table 1. The Near-RT RIC 1040 may transmit, to the third E2 node 1053, a RIC service query message indicating 'RAN function ID #1' and 'Revision 2'. The Near-RT RIC 1040 has transmitted the RIC service query message for the purpose of providing a RIC service according to the E2SM-RC, but the third E2 node 1053 may feed back a RAN function corresponding to the E2SM-CCC. This is because, referring to Table 1, each RAN function item includes only a RAN function ID and a RAN function revision as parameters indicating the RAN function, and does not include other parameters. Since information on a definition or a service model related to the RAN function is not included in the RIC service query message of the Near-RT RIC 1040, the third E2 node 1053 may not know that erroneous information is stored in the Near-RT RIC 1040. In other words, for a RAN function for which a RAN function ID and a RAN function revision indicated by the Near-RT RIC 1040 are the same, the third E2 node 1053 may not know the above-described error. According to the standard, if information on RAN functions (e.g., a RAN Functions Accepted List) in the RIC service query message of the Near-RT RIC 1040 all matches RAN functions supported by the third E2 node 1053, the third E2 node 1053 may transmit a RIC service update message not including separate information (e.g., a RAN Function Added List IE, a RAN Function Modified List IE and a RAN Function Deleted List IE) on the RAN function. Since the 'RAN function ID #1' and the 'Revision 2' are the same for both the third E2 node 1053 and the Near-RT RIC 1040, the 'RAN function ID #2' and the 'Revision 1' are the same for both the third E2 node 1053 and the Near-RT RIC 1040, and the 'RAN function ID #3' and the 'Revision 1' are the same for both the third E2 node 1053 and the Near-RT RIC 1040, the third E2 node 1053 may transmit, to the Near-RT RIC 1040, the RIC service update message not including separate information (e.g., the RAN Function Added List IE, the RAN Function Modified List IE and a RAN Function Deleted List IE) on the RAN function. Accordingly, the Near-RT RIC 1040 comes to perform a RIC subscription procedure or a RIC control procedure based on the erroneous profile for the third E2 node 1053.

In order to resolve the above-described problem, in embodiments of the present disclosure, schemes are described for more specifically informing the E2 node (e.g., the first E2 node 1051, the second E2 node 1052, or the third E2 node 1053) of the information on the RAN function through the RIC service query message, or requesting all RAN functions supportable by the E2 node.

### 1. A first scheme

The Near-RT RIC 1040 may transmit, to the E2 node, for each RAN function, the RIC service query message including a RAN function ID, a RAN function revision, and a RAN function OID. For example, the RIC service query message may have the following format.

**[Table 2]**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3 | | YES | reject |
| Transaction ID | M | | 9.2.33 | | YES | reject |
| **RAN Functions Accepted List** | | *0..1* | | Complete list of Functions previously accepted by Near-RT RIC | | |
| >RAN Functions ID Item | | *1* .. <*maxofRANfunctionID*> | | | YES | reject |
| >>RAN Function ID | M | | 9.2.8 | Id of the declared Function | - | |
| >>RAN Function Revision | M | | 9.2.24 | Revision counter | - | |
| >>RAN Function OID | M or O | | 9.2.31 | Object identifier of corresponding E2SM | | |

For 'IE type and reference', the O-RAN WG3 E2AP standard may be referred to. 'M' indicates that a corresponding IE is mandatorily included, and 'O' indicates that a corresponding IE is optionally included. 'Message Type' indicates a message type (e.g., an initiating message, a successful outcome, or an unsuccessful outcome), and 'Transaction ID' may be used to uniquely identify a corresponding procedure (e.g., the RIC service update procedure) among parallel ongoing procedures of the same type. 'RAN Functions Accepted List' indicates a list of all RAN functions accepted by the Near-RT RIC 1040. 'RAN Functions ID Item' indicates a RAN function ID ('RAN Function ID'), a RAN function revision ('RAN Function Revision'), and a RAN function OID ('RAN Function OID') for each RAN function. The RAN function revision indicates a revision counter for a corresponding RAN function. The RAN function OID may uniquely indicate a specific E2 service model (SM). The RAN function OID may be used to indicate a RAN function definition for a specific E2SM. As a service model corresponding to the RAN function is indicated through the RAN function OID, a problem of information mismatch between the E2 node and the Near-RT RIC 1040 may be resolved. The RAN function OID may indicate a service model specified in the O-RAN. The RAN function OID may indicate one of a plurality of service models specified in the O-RAN. For example, the plurality of service models may include a network interface (E2SM-NI), key performance monitoring (E2SM-KPM) version 1, E2SM-KPM version 2, radio control (E2SM-RC), and/or cell configuration and control (E2SM-CCC). The RAN function OID may have a different value according to a service model intended to be indicated. For example, the RAN function OID may have the following format.

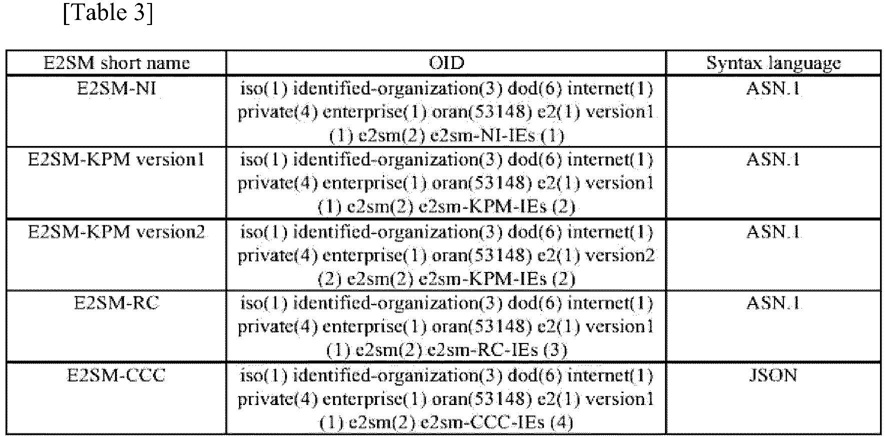

### 2. A second scheme

The Near-RT RIC 1040 may transmit, to the E2 node, for each RAN function, a RIC service query message including, a RAN function ID, a RAN function revision, a RAN function OID, and a RAN function definition. For example, the RIC service query message may have the following format.

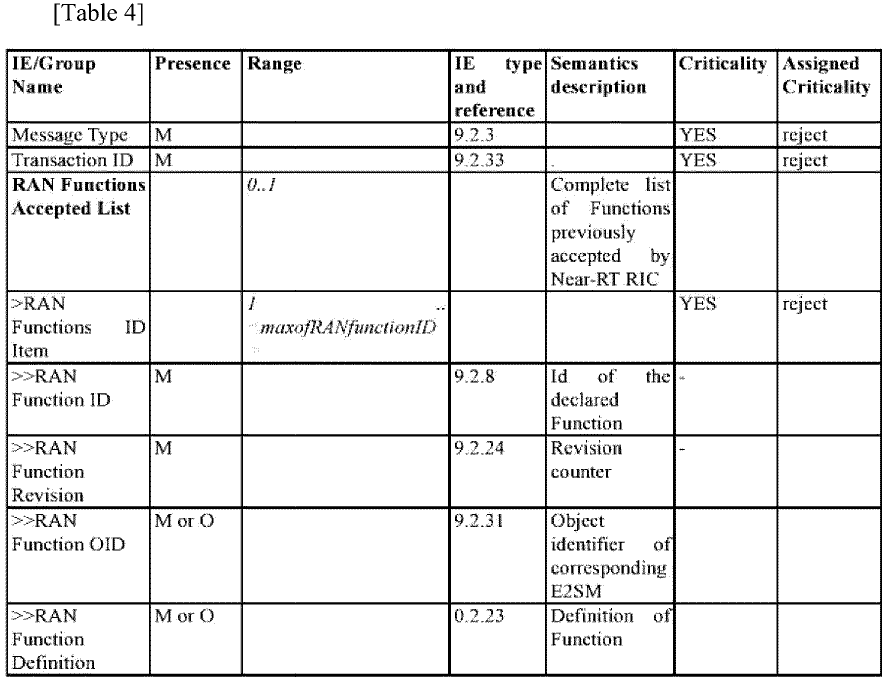

For 'IE type and reference', the O-RAN WG3 E2AP standard may be referred to. 'M' indicates that a corresponding IE is mandatorily included, and 'O' indicates that a corresponding IE is optionally included. 'Message Type' indicates a message type (e.g., an initiating message, a successful outcome, or an unsuccessful outcome), and 'Transaction ID' may be used to uniquely identify a corresponding procedure (e.g., the RIC service update procedure) among parallel ongoing procedures of the same type. 'RAN Functions Accepted List' indicates a list of all RAN functions accepted by the Near-RT RIC 1040. 'RAN Functions ID Item' indicates a RAN function ID ('RAN Function ID'), a RAN function revision ('RAN Function Revision'), a RAN function OID ('RAN Function OID'), and a RAN function definition ('RAN Function Definition') for each RAN function. The RAN function revision indicates a revision counter for a corresponding RAN function. The RAN function OID may uniquely indicate a specific E2 service model (SM) (e.g., an OID and an E2SM in Table 3). The RAN function definition may indicate how the E2 node is configured to support a given function in the corresponding service model (e.g., a type of a service model indicated by the RAN function OID). The RAN function definition may include information required to determine a configuration of the given function of the E2 node. The RAN function definition may include one or more RAN parameters according to a RIC service style (e.g., report, insert, control, or policy).

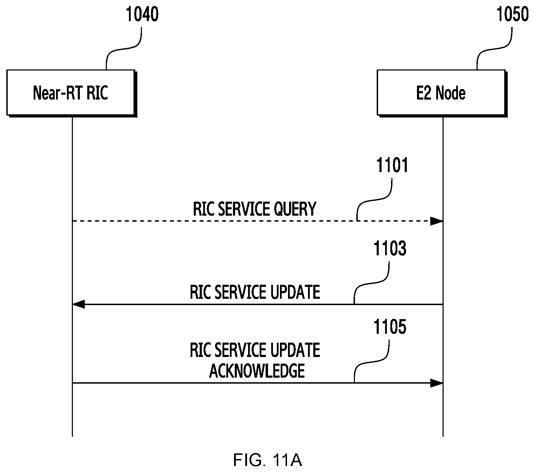

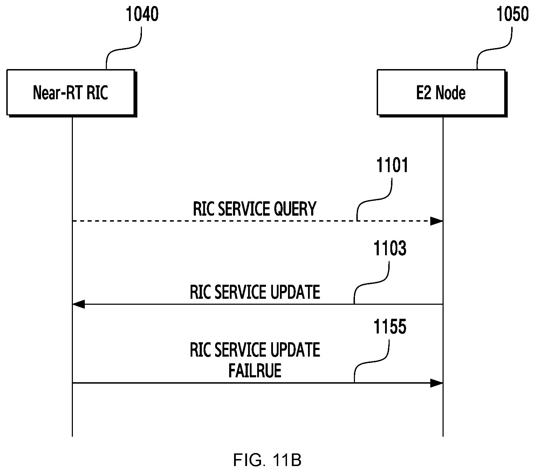

Meanwhile, for backward compatibility, the RAN function OID and the RAN function definition are configured as shown in Table 4 (e.g., optional), but embodiments of the present disclosure are not limited thereto. For example, for format matching with an item of the RIC service update message (e.g., Table 8 in FIGS. 11A and 11B), each RAN function item of the RIC service query message may be configured as shown in the table below.

**[Table 5]**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3 | | YES | reject |
| Transaction ID | M | | 9.2.33 | | YES | reject |
| **RAN Functions Accepted List** | | *0..1* | | Complete list of Functions previously accepted by Near-RT RIC | | |
| >RAN Functions ID Item | | *1* .. <*maxofRANfunctionID*> | | | YES | reject |
| >>RAN Function ID | M | | 9.2.8 | Id of the declared Function | - | |
| >>RAN Function Definition | M | | 0.2.23 | Definition of Function | >>RAN Function Definition | M |
| >>RAN Function Revision | M | | 9.2.24 | Revision counter | - | |
| >>RAN Function OID | M | | 9.2.31 | Object identifier of corresponding E2SM | | |

For each IE of Table 5, the descriptions of Table 4 may be referred to.

### 3. A third scheme

The Near-RT RIC 1040 may transmit, to the E2 node, a RIC service query message including only a message type and a transaction ID. For example, the RIC service query message may have the following format.

**[Table 6]**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3 | | YES | reject |
| Transaction ID | M | | 9.2.33 | - | YES | reject |

For 'IE type and reference', the O-RAN WG3 E2AP standard may be referred to. 'M' indicates that a corresponding IE is mandatorily included, and 'O' indicates that a corresponding IE is optionally included. 'Message Type' indicates a message type (e.g., an initiating message, a successful outcome, or an unsuccessful outcome), and 'Transaction ID' may be used to uniquely identify a corresponding procedure (e.g., the RIC service update procedure) among parallel ongoing procedures of the same type. A RIC service query message not including separate information related to the RAN function may be used to request a list of all RAN functions supportable by the E2 node. A format of the RIC service query message may be fixed to the format of Table 6. The E2 node may be configured to always feed back, in response to the RIC service query message, the list of all RAN functions supportable by the E2 node. The list of all RAN functions supportable by the E2 node may include, for each RAN function, a RAN function ID, a RAN function definition, a RAN function revision, and a RAN function OID.

### 4. A fourth scheme

The Near-RT RIC 1040 may transmit, to the E2 node, a RIC service query message including an indicator for requesting a full list. For example, the RIC service query message may have the following format.

**[Table 7]**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3 | | YES | reject |
| Transaction ID | M | | 9.2.33 | - | YES | reject |
| **RAN Functions Accepted List** | | *0..1* | | Complete list of Functions previously accepted by Near-RT RIC | | |
| >RAN Functions ID Item | | *1* .. <*maxofRANfunctionID*> | | | YES | reject |
| >>RAN Function ID | M | | 9.2.8 | Id of the declared Function | - | |
| >>RAN Function Revision | M | | 9.2.24 | Revision counter | - | |
| >>RAN Function OID | M or O | | 9.2.31 | Object identifier of corresponding E2SM | | |
| Request Indicator | M or O | | | To request complete list of supported RAN functions at E2 node | | |

For 'IE type and reference', the O-RAN WG3 E2AP standard may be referred to. 'M' indicates that a corresponding IE is mandatorily included, and 'O' indicates that a corresponding IE is optionally included. 'Message Type' indicates a message type (e.g., an initiating message, a successful outcome, or an unsuccessful outcome), and 'Transaction ID' may be used to uniquely identify a corresponding procedure (e.g., the RIC service update procedure) among parallel ongoing procedures of the same type. 'RAN Functions Accepted List' indicates a list of all RAN functions accepted by the Near-RT RIC 1040. 'RAN Functions ID Item' indicates a RAN function ID ('RAN Function ID'), a RAN function revision ('RAN Function Revision'), and a RAN function OID ('RAN Function OID') for each RAN function. The RAN function revision indicates a revision counter for a corresponding RAN function. The RAN function OID may uniquely indicate a specific E2 SM. The RAN function OID may be used to indicate a RAN function definition for a specific E2SM. 'Request Indicator', which is a request indicator, may be used to request, from the E2 node, a list of all RAN functions supported by the E2 node. 'Request Indicator' may be used as a conditional indicator. If even one information (e.g., the RAN Functions Accepted List) on RAN functions in the RIC service query message of the Near-RT RIC 1040 does not match information actually stored in the E2 node, the conditional indicator may cause the E2 node to transmit a RIC service update message including information on all RAN functions supported by the E2 node. Through the indicator, an information mismatch between the Near-RT RIC 1040 and the E2 node may be resolved early. Table 7 is an example in which the indicator is added to Table 2 of the first scheme, but embodiments of the present disclosure are not limited thereto. The indicator may also be added to Table 1, Table 4, and Table 5, in addition to Table 2.

FIGS. 11A and 11B illustrate signal flows for a RIC service update procedure. A purpose of the RIC service update procedure is to update application-level RIC service-related data required for an E2 node and a Near-RT RIC to correctly interoperate through an E2 interface.

Referring to FIG. 11A, in operation 1101, a Near-RT RIC 1040 may transmit a RIC service query message to an E2 node 1050. According to an embodiment, the RIC service query message may include, in a RAN Functions Accepted List, an OID corresponding to each RAN function. For example, the RIC service query message may have the format of Table 2. According to an embodiment, the RIC service query message may include, in the RAN Functions Accepted List, an OID and a RAN function definition corresponding to each RAN function. For example, the RIC service query message may have the format of Table 4 or Table 5. According to an embodiment, the RIC service query message may not include the RAN Functions Accepted List. For example, the RIC service query message may have the format of Table 6. According to an embodiment, the RIC service query message may include an indicator for requesting a full list when there is a mismatch with the RAN Functions Accepted List. For example, the RIC service query message may have the format of Table 7.

In operation 1103, the E2 node 1050 may transmit a RIC service update message to the Near-RT RIC 1040. When the Near-RT RIC 1040 receives the RIC service update message from the E2 node 1050, the Near-RT RIC 1040 may update application-level data. The updated RAN functions may be used for a RIC subscription request or a RIC control message. For example, the RIC service update message may have the following format.

**[Table 8]**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3 | | YES | reject |
| Transaction ID | M | | 9.2.33 | - | YES | reject |
| **RAN Functions Added List** | | *0..1* | | List of added RAN functions in E2 node | | |
| >RAN Functions Item | | *1* .. <*maxofRANfunctionID>* | | | YES | reject |
| >>RAN Function ID | M | | 9.2.8 | Id of the declared Function | - | |
| >>RAN Function Definition | M | | 9.2.23 | Definition of Function | - | |
| >>RAN Function Revision | M | | 9.2.24 | Revision counter | - | |
| >>RAN Function OID | M | | 9.2.31 | Object identifier of corresponding E2SM | - | |
| **RAN Functions Modified List** | | *0..I* | | List of Modified RAN functions in E2 node | | |
| >RAN Functions Item | | *I* .. *<maxofRANfunctionID>* | | | YES | reject |
| >>RAN Function ID | M | | 9.2.8 | Id of the declared Function | - | |
| >>RAN Function Definition | M | | 9.2.23 | Definition of Function | - | |
| >>RAN Function Revision | M | | 9.2.24 | Revision counter | - | |
| >>RAN Function OID | M | | 9.2.31 | Object identifier of corresponding E2SM | - | |
| **RAN Functions Deleted List** | | *0..1* | | List of deleted RAN functions in E2 node | | |
| >RAN Functions ID Item | | *1* .. *<maxofRANfunctionID>* | | | YES | reject |
| >>RAN Function ID | M | | 9.2.8 | Id of the declared Function | - | |
| >>RAN Function Revision | M | | 9.2.24 | Revision counter | - | |

For 'IE type and reference', an O-RAN WG3 E2AP standard may be referred to. 'M' indicates that a corresponding IE is mandatorily included, and 'O' indicates that a corresponding IE is optionally included. 'Message Type' indicates a message type (e.g., an initiating message, a successful outcome, or an unsuccessful outcome), and 'Transaction ID' may be used to uniquely identify a corresponding procedure (e.g., the RIC service update procedure) among parallel ongoing procedures of the same type. 'RAN Functions Added List' indicates information on RAN functions to be added by the E2 node 1050. 'RAN Functions Modified List' indicates information on RAN functions to be modified by the E2 node 1050. 'RAN Functions Deleted List' indicates information on RAN functions to be deleted by the E2 node 1050. Information on each RAN function indicates a RAN function ID ('RAN Function ID'), a RAN function definition ('RAN Function Definition'), a RAN function revision ('RAN Function Revision'), and a RAN function OID ('RAN Function OID'). The RAN function revision indicates a revision counter for a corresponding RAN function. The RAN function OID may uniquely indicate a specific E2 service model (SM) (e.g., the OID and the E2SM of Table 3). The RAN function definition may indicate how the E2 node is configured to support a given function in the corresponding service model (e.g., a type of a service model indicated by the RAN function OID). The RAN function definition may include information required to determine a configuration of the given function of the E2 node.

The E2 node 1050 may transmit a RIC service update message to the Near-RT RIC 1040 in response to the RIC service query message. For example, if there is no RAN Functions Accepted List in the RIC service query message, the E2 node 1050 may transmit a RIC service update message including a list of all RAN functions supported by the E2 node 1050. For example, if information on RAN functions in the RAN Functions Accepted List in the RIC service query message aligns with the information on the RAN functions supported by the E2 node 1050, the E2 node 1050 may transmit a RIC service update message without the list (e.g., 'RAN Functions Added List', 'RAN Functions Modified List', or 'RAN Functions Deleted List' of Table 8) of the RAN functions. For example, if information on RAN functions in the RAN Functions Accepted List in the RIC service query message does not align with the information on the RAN functions supported by the E2 node 1050, the E2 node 1050 may transmit, through the RIC service update message, a list (e.g., 'RAN Functions Added List', 'RAN Functions Modified List', or 'RAN Functions Deleted List' of Table 8) of required RAN functions in order to ensure realignment between the E2 node 1050 and the Near-RT RIC 1040.

In operation 1105, the Near-RT RIC 1040 may transmit a RIC service update acknowledge message to the E2 node 1050. If an update of at least one RAN function in the RIC service update message succeeds, the Near-RT RIC 1040 may transmit the update acknowledge message. For example, the update acknowledge message may have the following format.

**[Table 9]**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3 | | YES | reject |
| Transaction ID | M | | 9.2.33 | - | YES | reject |
| RAN Functions Accepted List | | *0..1* | | List of Functions accepted by Near-RT RIC | | |
| >RAN Functions ID Item | | *1* .. *<maxofRANfunctionID*> | | | YES | reject |
| >>RAN Function ID | M | | 9.2.8 | Id of the declared Function | - | |
| >>RAN Function Revision | M | | 9.2.24 | Revision counter | - | |
| RAN Functions Rejected List | | *0..1* | | List of Functions not accepted by Near-RT RIC | | |
| >RAN Functions Cause Item | | *1* .. <*maxofRANfunctionID*> | | | YES | reject |
| >>RAN Function ID | M | | 9.2.8 | Id of the declared Function | - | |
| >>Cause | M | | 9.2.1 | Reason for not accepting function | - | |

For 'IE type and reference', the O-RAN WG3 E2AP standard may be referred to. 'M' indicates that a corresponding IE is mandatorily included, and 'O' indicates that a corresponding IE is optionally included. For contents of each IE, Tables 1 to 8 may be referred to. Information on a cause for rejection for each RAN function may be included.

According to an embodiment, information included for each RAN function in the RIC service update acknowledge message may match the information included for each RAN function in the RIC service query message. For example, in a case that the RIC service query message according to Table 2 is transmitted, the Near-RT RIC 1040 may transmit, to the E2 node 1050, for each RAN function, the list (e.g., the 'RAN Functions Accepted List' IE) including a RAN function ID, a RAN function revision, and a RAN function OID. For another example, in a case that the RIC service query message according to Table 4 is transmitted, the Near-RT RIC 1040 may transmit, to the E2 node 1050, for each RAN function, the list (e.g., the 'RAN Functions Accepted List' IE) including a RAN function ID, a RAN function revision, a RAN function OID, and a RAN function definition.

Referring to FIG. 11B, in operation 1101, the Near-RT RIC 1040 may transmit a RIC service query message to the E2 node 1050. According to an embodiment, the RIC service query message may include, in the RAN Functions Accepted List, an OID corresponding to each RAN function. For example, the RIC service query message may have the format of Table 2. According to an embodiment, the RIC service query message may include, in the RAN Functions Accepted List, an OID and a RAN function definition corresponding to each RAN function. For example, the RIC service query message may have the format of Table 4 or Table 5. According to an embodiment, the RIC service query message may not include the RAN Functions Accepted List. For example, the RIC service query message may have the format of Table 6. According to an embodiment, the RIC service query message may include an indicator for requesting a full list when there is a mismatch with the RAN Functions Accepted List. For example, the RIC service query message may have the format of Table 7.

In operation 1103, the E2 node 1050 may transmit a RIC service update message to the Near-RT RIC 1040. When the Near-RT RIC 1040 receives the RIC service update message from the E2 node 1050, the Near-RT RIC 1040 may update application-level data. The updated RAN functions may be used for a RIC subscription request or a RIC control message. For example, the RIC service update message may have the format of Table 8.

In operation 1155, the Near-RT RIC 1040 may transmit a RIC service update failure message to the E2 node 1050. If it is difficult to accept an update of the RIC service update message, the Near-RT RIC 1040 may transmit the RIC service update failure message. For example, the RIC service update failure message may have the following format.

**[Table 10]**

| IE/Group Name | **Presence** | **Range** | **IE type and reference** | **Semantics description** | **Criticality** | **Assigned Criticality** |
|---|---|---|---|---|---|---|
| Message Type | M | | 923 | | YES | reject |
| Transaction ID | M | | 9.2.33 | - | YES | reject |
| Cause | M | | 9.2.1 | | YES | reject |
| Time To Wait | O | | 9.2.5 | | YES | ignore |
| Criticality Diagnostics | O | | 9.2.2 | | YES | ignore |

For 'IE type and reference', the O-RAN WG3 E2AP standard may be referred to. 'M' indicates that a corresponding IE is mandatorily included, and 'O' indicates that a corresponding IE is optionally included. 'Message Type' indicates a message type (e.g., an initiating message, a successful outcome, or an unsuccessful outcome), and 'Transaction ID' may be used to uniquely identify a corresponding procedure (e.g., the RIC service update procedure) among parallel ongoing procedures of the same type. 'Cause' indicates a cause of failure, and 'Time To Wait' indicates a minimum permitted waiting time.

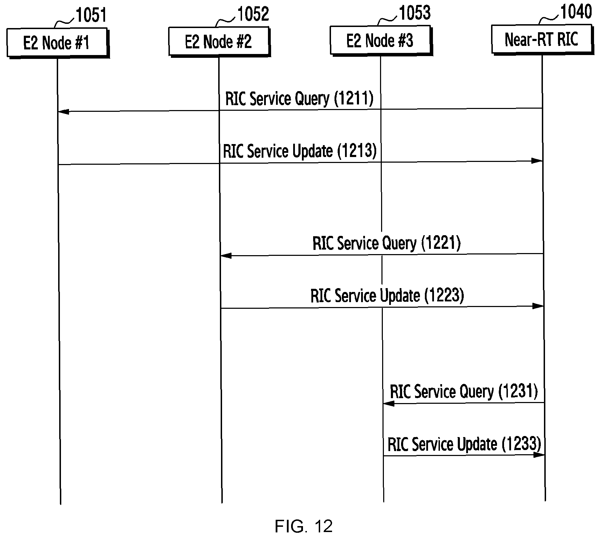

FIG. 12 illustrates an example of resolving an error in a Near-RT RIC (e.g., the Near-RT RIC 1040) through a RIC service update procedure. In FIG. 12, examples in which an incorrectly stored RAN function profile of an E2 node in the Near-RT RIC 1040 is corrected by performing the RIC service update procedure according to the above-described schemes (e.g., the first scheme, the second scheme, the third scheme, the fourth scheme, and/or a technically equivalent scheme) are described. A situation in which the RAN functions of the first E2 node 1051, the second E2 node 1052, and the third E2 node 1053, illustrated in FIG. 10, are stored in the Near-RT RIC 1040 is assumed.

Referring to FIG. 12, in operation 1211, the Near-RT RIC 1040 may transmit a RIC service query message to the first E2 node 1051. In operation 1213, the first E2 node 1051 may transmit a RIC service update message to the Near-RT RIC 1040.

According to an embodiment, when the first scheme is followed, the RIC service query message may include {('Revision 2' and an 'OID (e.g., indicating E2SM-RC)' corresponding to a RAN function ID #1), ('Revision 1' and an 'OID (e.g., indicating E2SM-CCC)' corresponding to a RAN function ID #2), and ('Revision 1' and an 'OID (e.g., indicating E2SM-KPM)' corresponding to a RAN function ID #3)}. The RIC service query message may have the format of Table 2. The first E2 node 1051 may compare information on RAN functions in the RIC service query message with information on RAN functions supported by the first E2 node 1051. For the RAN function ID #2, the first E2 node 1051 and the Near-RT RIC 1040 have different service models. For the RAN function ID #3, the first E2 node 1051 and the Near-RT RIC 1040 have different service models. Accordingly, the first E2 node 1051 may transmit, to the Near-RT RIC 1040, a RAN function item (e.g., a combination of a RAN function ID, a RAN function definition, a RAN function revision, and a RAN function OID) corresponding to each of the RAN function ID #2 and the RAN function ID #3. For example, the first E2 node 1051 may include, in the 'RAN Functions Modified List' IE of Table 8, {(a RAN function definition, a RAN function revision, and a RAN function OID (e.g., E2SM-KPM) corresponding to the RAN function ID #2), and (a RAN function definition, a RAN function revision, and a RAN function OID (e.g., E2SM-CCC) corresponding to the RAN function ID #3)}. The first E2 node 1051 may transmit, to the Near-RT RIC 1040, a RIC service update message including the 'RAN Functions Modified List' IE.

According to an embodiment, when the second scheme is followed, the RIC service query message may include {('Revision 2', an 'OID (e.g., indicating E2SM-RC)', and a RAN function definition corresponding to a RAN function ID #1), ('Revision 1', an 'OID (e.g., indicating E2SM-CCC)', and a RAN function definition corresponding to a RAN function ID #2), and ('Revision 1', an 'OID (e.g., indicating E2SM-KPM)', and a RAN function definition corresponding to a RAN function ID #3)}. The RIC service query message may have the format of Table 4. The first E2 node 1051 may compare information on RAN functions in the RIC service query message with information on RAN functions supported by the first E2 node 1051. For the RAN function ID #2, the first E2 node 1051 and the Near-RT RIC 1040 have different service models. For the RAN function ID #3, the first E2 node 1051 and the Near-RT RIC 1040 have different service models. Accordingly, the first E2 node 1051 may transmit, to the Near-RT RIC 1040, a RAN function item (e.g., a combination of a RAN function ID, a RAN function definition, a RAN function revision, and a RAN function OID) corresponding to each of the RAN function ID #2 and the RAN function ID #3. For example, the first E2 node 1051 may include, in the 'RAN Functions Modified List' IE of Table 8, {(a RAN function definition, a RAN function revision, and a RAN function OID (e.g., E2SM-KPM) corresponding to the RAN function ID #2), and (a RAN function definition, a RAN function revision, and a RAN function OID (e.g., E2SM-CCC) corresponding to the RAN function ID #3)}. The first E2 node 1051 may transmit, to the Near-RT RIC 1040, a RIC service update message including the 'RAN Functions Modified List' IE.

According to an embodiment, when the third scheme is followed, the RIC service query message may not include other information (e.g., information on a RAN function) in addition to a message type and a transaction ID. For example, the RIC service query message may have the format of Table 6. The first E2 node 1051 may transmit, in response to the RIC service query message, a RIC service update message including a list of all RAN functions supported by the first E2 node 1051. For example, the first E2 node 1051 may include, in the 'RAN Functions Modified List' IE of Table 8, {(a RAN function definition, a RAN function revision, and a RAN function OID (e.g., E2SM-RC) corresponding to a RAN function ID #1), (a RAN function definition, a RAN function revision, and a RAN function OID (e.g., E2SM-KPM) corresponding to a RAN function ID #2), and (a RAN function definition, a RAN function revision, and a RAN function OID (e.g., E2SM-CCC) corresponding to a RAN function ID #3)}. The first E2 node 1051 may transmit, to the Near-RT RIC 1040, a RIC service update message including the 'RAN Functions Modified List' IE.

According to an embodiment, when the fourth scheme is followed, the RIC service query message may include {('Revision 2' and an 'OID (e.g., indicating E2SM-RC)' corresponding to a RAN function ID #1), ('Revision 1' and an 'OID (e.g., indicating E2SM-CCC)' corresponding to a RAN function ID #2), and ('Revision 1' and an 'OID (e.g., indicating E2SM-KPM)' corresponding to a RAN function ID #3)} and a request indicator (e.g., the 'Request Indicator' of Table 7). For example, the RIC service query message may have the format of Table 7. The first E2 node 1051 may compare information on RAN functions in the RIC service query message with information on RAN functions supported by the first E2 node 1051. The first E2 node 1051 may recognize that, regarding the RAN function ID #2 or the RAN function ID #3, the first E2 node 1051 stores information different from information of the Near-RT RIC. In response to identifying such a mismatch, the first E2 node 1051 may transmit a RIC service update message including a list of all RAN functions supported by the first E2 node 1051. For example, the first E2 node 1051 may include, in the 'RAN Functions Modified List' IE of Table 8, {(a RAN function definition, a RAN function revision, and a RAN function OID (e.g., E2SM-RC) corresponding to the RAN function ID #1), (a RAN function definition, a RAN function revision, and a RAN function OID (e.g., E2SM-KPM) corresponding to the RAN function ID #2), and (a RAN function definition, a RAN function revision, and a RAN function OID (e.g., E2SM-CCC) corresponding to the RAN function ID #3)}. The first E2 node 1051 may transmit, to the Near-RT RIC 1040, a RIC service update message including the 'RAN Functions Modified List' IE.

In operation 1221, the Near-RT RIC 1040 may transmit a RIC service query message to the second E2 node 1052. In operation 1223, the second E2 node 1052 may transmit a RIC service update message to the Near-RT RIC 1040. Similarly to the first E2 node 1051, the second E2 node 1052 may also transmit the RIC service update message for alignment with the Near-RT RIC 1040.

According to an embodiment, the second E2 node 1052 may identify a RAN Functions Accepted List (e.g., the 'RAN Functions Accepted List' IE of Table 2 of the first scheme, Table 4 of the second scheme, or Table 7 of the fourth scheme) of the RIC service query message. The second E2 node 1052 may compare information on a RAN function(s) in the RAN Functions Accepted List with information on a RAN function(s) supported by the second E2 node 1052. For example, in response to the RIC service query message according to the first scheme or the second scheme, the second E2 node 1052 may transmit, through a RIC service update message, a RAN function item (e.g., a combination of a RAN function ID, a RAN function definition, a RAN function revision, and a RAN function OID) corresponding to a difference according to a result of the comparison. For example, in response to the RIC service query message according to the fourth scheme, the second E2 node 1052 may transmit, through a RIC service update message, each of the RAN function items (e.g., a combination of a RAN function ID, a RAN function definition, a RAN function revision, and a RAN function OID) of all RAN functions supported by the second E2 node 1052, regardless of the result of the comparison. According to another embodiment, the second E2 node 1052 may identify the RIC service query message transmitted according to the above-described third scheme. In response to the RIC service query message, the second E2 node 1052 may transmit, through the RIC service update message, each of the RAN function items (e.g., a combination of a RAN function ID, a RAN function definition, a RAN function revision, and a RAN function OID) of all RAN functions supported by the second E2 node 1052.

In operation 1231, the Near-RT RIC 1040 may transmit a RIC service query message to the third E2 node 1053. In operation 1233, the third E2 node 1053 may transmit a RIC service update message to the Near-RT RIC 1040. Similarly to the first E2 node 1051, the third E2 node 1053 may also transmit the RIC service update message for alignment with the Near-RT RIC 1040. According to an embodiment, the third E2 node 1053 may identify a RAN Functions Accepted List (e.g., the 'RAN Functions Accepted List' IE of Table 2 of the first scheme, Table 4 of the second scheme, or Table 7 of the fourth scheme) of the RIC service query message. The third E2 node 1053 may compare information on a RAN function(s) in the RAN Functions Accepted List with information on a RAN function(s) supported by the third E2 node 1053. For example, in response to the RIC service query message according to the first scheme or the second scheme, the third E2 node 1053 may transmit, through a RIC service update message, a RAN function item (e.g., a combination of a RAN function ID, a RAN function definition, a RAN function revision, and a RAN function OID) corresponding to a difference according to a result of the comparison. For example, in response to the RIC service query message according to the fourth scheme, the third E2 node 1053 may transmit, through a RIC service update message, each of the RAN function items (e.g., a combination of a RAN function ID, a RAN function definition, a RAN function revision, and a RAN function OID) of all RAN functions supported by the third E2 node 1053, regardless of the result of the comparison. According to another embodiment, the third E2 node 1053 may identify the RIC service query message transmitted according to the above-described third scheme. In response to the RIC service query message, the third E2 node 1053 may transmit, through the RIC service update message, each of the RAN function items (e.g., a combination of a RAN function ID, a RAN function definition, a RAN function revision, and a RAN function OID) of all RAN functions supported by the third E2 node 1053.

By delivering additional information (e.g., a RAN function OID or a RAN function definition) to the E2 node through the RIC service query message, it is possible to query the E2 node for a more accurate RAN function. Accordingly, even if RAN function information on the E2 node is incorrectly stored in the Near-RT RIC, the RAN function information may be correctly shared between the two nodes through an E2 service update procedure. By causing the E2 node to transmit, through the above-described RIC service query message, an item (e.g., a RAN function ID, a RAN function definition, a RAN function revision, and a RAN function OID) on a RAN function incorrectly stored in the Near-RT RIC, a corrupted database in the Near-RT RIC may be recovered.

The effects that can be obtained from the present disclosure are not limited to those described above, and any other effects not mentioned herein will be clearly understood by those having ordinary knowledge in the art to which the present disclosure belongs, from the following description.

In embodiments, a method performed by an E2 node is provided. The method may comprise receiving a RIC service query message from a Near-real time (RT) radio access network (RAN) intelligent controller (Near-RT RIC). The method may comprise, in response to the RIC service query message, transmitting a RIC service update message to the Near-RT RIC. The RIC service query message may include a message type, a transaction identifier (ID), and a list of RAN functions previously accepted by the Near-RT RIC. The list of RAN functions may include, for each RAN function, a RAN function ID, a RAN function revision, and a RAN function object identifier (OID) indicating a specific E2 service model (E2SM).

For example, the list of RAN functions may further include, for each RAN function, RAN function definition information. The RAN function definition information may be used to provide information necessary for the Near-RT RIC in order to support a corresponding RAN function at the E2 node. The RAN function OID may be used to identify a RAN function definition in the RAN function definition information.

For example, the RAN function OID may indicate one of a plurality of service models. The plurality of service models may include an E2SM- network interface (NI), an E2SM- key performance monitoring (KPM) version 1, an E2SM-KPM version 2, an E2SM- radio control (RC), and an E2SM- cell configuration and control (CCC).

For example, the method may comprise receiving a RIC service update acknowledge message or a RIC service update failure message from the Near-RT RIC. In a case that RAN functions supported at the E2 node do not match the functions in the list, the RIC service update message may include an addition list for RAN functions, a modification list for RAN functions, and/or a deletion list for RAN functions. In a case that RAN functions supported at the E2 node match the functions in the list, the RIC service update message may not include the addition list, the modification list, and the deletion list.

For example, the method may comprise receiving, from the Near-RT RIC, a second RIC service query message that does not include a list of RAN functions. The method may comprise transmitting a second RIC service update message to the Near-RT RIC. The second RIC service update message may include a list of all RAN functions supported at the E2 node, in response to the second RIC service query message that does not include the list of RAN functions.

In embodiments, a method performed by a Near-real time (RT) radio access network (RAN) intelligent controller (Near-RT RIC) is provided. The method may comprise transmitting a RIC service query message to an E2 node. The method may comprise receiving a RIC service update message from the E2 node. The RIC service query message may include a message type, a transaction identifier (ID), and a list of RAN functions previously accepted by the Near-RT RIC. The list of RAN functions may include, for each RAN function, a RAN function ID, a RAN function revision, and a RAN function object identifier (OID) indicating a specific E2 service model (E2SM).

For example, the list of RAN functions may further include, for each RAN function, RAN function definition information. The RAN function definition information may be used to provide information necessary for the Near-RT RIC in order to support a corresponding RAN function at the E2 node. The RAN function OID may be used to identify a RAN function definition in the RAN function definition information.

For example, the RAN function OID may indicate one of a plurality of service models. The plurality of service models may include an E2SM- network interface (NI), an E2SM- key performance monitoring (KPM) version 1, an E2SM-KPM version 2, an E2SM- radio control (RC), and an E2SM- cell configuration and control (CCC).

For example, the method may comprise transmitting a RIC service update acknowledge message or a RIC service update failure message to the E2 node. In a case that RAN functions supported at the E2 node do not match the functions in the list, the RIC service update message may include an addition list for RAN functions, a modification list for RAN functions, and/or a deletion list for RAN functions. In a case that RAN functions supported at the E2 node match the functions in the list, the RIC service update message may not include the addition list, the modification list, and the deletion list.

For example, the method may comprise transmitting, to the E2 node, that does not include a list of RAN functions. The method may comprise receiving a second RIC service update message from the E2 node. The second RIC service update message may include a list of all RAN functions supported at the E2 node, in response to the second RIC service query message that does not include the list of RAN functions.

In embodiments, an electronic device of an E2 node is provided. The electronic device may comprise at least one processor, and memory storing instructions. The instructions, when executed by the at least one processor, may cause the E2 node to receive a RIC service query message from a Near-real time (RT) radio access network (RAN) intelligent controller (Near-RT RIC), and, in response to the RIC service query message, transmit a RIC service update message to the Near-RT RIC. The RIC service query message may include a message type, a transaction identifier (ID), and a list of RAN functions previously accepted by the Near-RT RIC. The list of RAN functions may include, for each RAN function, a RAN function ID, a RAN function revision, and a RAN function object identifier (OID) indicating a specific E2 service model (E2SM).

For example, the list of RAN functions may further include, for each RAN function, RAN function definition information. The RAN function definition information may be used to provide information necessary for the Near-RT RIC in order to support a corresponding RAN function at the E2 node. The RAN function OID may be used to identify a RAN function definition in the RAN function definition information.

For example, the RAN function OID may indicate one of a plurality of service models. The plurality of service models may include an E2SM- network interface (NI), an E2SM- key performance monitoring (KPM) version 1, an E2SM-KPM version 2, an E2SM- radio control (RC), and an E2SM- cell configuration and control (CCC).

For example, the instructions, when executed by the at least one processor, may cause the E2 node to receive a RIC service update acknowledge message or a RIC service update failure message from the Near-RT RIC. In a case that RAN functions supported at the E2 node do not match the functions in the list, the RIC service update message may include an addition list for RAN functions, a modification list for RAN functions, and/or a deletion list for RAN functions. In a case that RAN functions supported at the E2 node match the functions in the list, the RIC service update message may not include the addition list, the modification list, and the deletion list.

For example, the instructions, when executed by the at least one processor, may cause the E2 node to receive, from the Near-RT RIC, a second RIC service query message that does not include a list of RAN functions, and transmit a second RIC service update message to the Near-RT RIC. The second RIC service update message may include a list of all RAN functions supported at the E2 node, in response to the second RIC service query message that does not include the list of RAN functions.

In embodiments, an electronic device of a Near-real time (RT) radio access network (RAN) intelligent controller (Near-RT RIC) is provided. The electronic device may comprise at least one processor, and memory storing instructions. The instructions, when executed by the at least one processor, may cause the Near-RT RIC to transmit a RIC service query message to an E2 node, and receive a RIC service update message from the E2 node. The RIC service query message may include a message type, a transaction identifier (ID), and a list of RAN functions previously accepted by the Near-RT RIC. The list of RAN functions may include, for each RAN function, a RAN function ID, a RAN function revision, and a RAN function object identifier (OID) indicating a specific E2 service model (E2SM).

For example, the list of RAN functions may further include, for each RAN function, RAN function definition information. The RAN function definition information may be used to provide information necessary for the Near-RT RIC in order to support a corresponding RAN function at the E2 node. The RAN function OID may be used to identify a RAN function definition in the RAN function definition information.

For example, the RAN function OID may indicate one of a plurality of service models. The plurality of service models may include an E2SM-network interface (NI), an E2SM-key performance monitoring (KPM) version 1, an E2SM-KPM version 2, an E2SM-radio control (RC), and an E2SM-cell configuration and control (CCC).

For example, the instructions, when executed by the at least one processor, may cause the Near-RT RIC to transmit a RIC service update acknowledge message or a RIC service update failure message to the E2 node. In a case that RAN functions supported at the E2 node do not match the functions in the list, the RIC service update message may include an addition list for RAN functions, a modification list for RAN functions, and/or a deletion list for RAN functions. In a case that RAN functions supported at the E2 node match the functions in the list, the RIC service update message may not include the addition list, the modification list, and the deletion list.

For example, the instructions, when executed by the at least one processor, may cause the Near-RT RIC to transmit, to the E2 node, a second RIC service query message that does not include the list of RAN functions, and receive a second RIC service update message from the E2 node. The second RIC service update message may include a list of all RAN functions supported at the E2 node, in response to the second RIC service query message that does not include the list of RAN functions.

In embodiments, an electronic device of an E2 node is provided. The electronic device may comprise at least one transceiver and at least one processor. The at least one processor may be configured to receive a RIC service query message from a Near-real time (RT) radio access network (RAN) intelligent controller (Near-RT RIC) through the at least one transceiver, and, in response to the RIC service query message, transmit a RIC service update message to the Near-RT RIC through the at least one transceiver. The RIC service query message may include a message type, a transaction identifier (ID), and a list of RAN functions previously accepted by the Near-RT RIC. The list of RAN functions may include, for each RAN function, a RAN function ID, a RAN function revision, and a RAN function object identifier (OID) indicating a specific E2 service model (E2SM).

In embodiments, an electronic device of a Near-real time (RT) radio access network (RAN) intelligent controller (Near-RT RIC) is provided. The electronic device may comprise at least one transceiver and at least one processor. The at least one processor may be configured to cause the Near-RT RIC to transmit a RIC service query message to an E2 node through the at least one transceiver, and receive a RIC service update message from the E2 node through the at least one transceiver. The RIC service query message may include a message type, a transaction identifier (ID), and a list of RAN functions previously accepted by the Near-RT RIC. The list of RAN functions may include, for each RAN function, a RAN function ID, a RAN function revision, and a RAN function object identifier (OID) indicating a specific E2 service model (E2SM).

In embodiments, a non-transitory computer-readable storage medium is provided. The non-transitory computer-readable storage medium may comprise instructions that, when executed by a processor, cause an E2 node to perform operations comprising receiving a RIC service query message from a Near-real time (RT) radio access network (RAN) intelligent controller (Near-RT RIC), and, in response to the RIC service query message, transmitting a RIC service update message to the Near-RT RIC. The RIC service query message may include a message type, a transaction identifier (ID), and a list of RAN functions previously accepted by the Near-RT RIC. The list of RAN functions may include, for each RAN function, a RAN function ID, a RAN function revision, and a RAN function object identifier (OID) indicating a specific E2 service model (E2SM).

In embodiments, a non-transitory computer-readable storage medium is provided. The non-transitory computer-readable storage medium may include instructions that, when executed by a processor, cause a Near-real time (RT) radio access network (RAN) intelligent controller (Near-RT RIC) to perform operations comprising transmitting a RIC service query message to an E2 node, and receiving a RIC service update message from the E2 node. The RIC service query message may include a message type, a transaction identifier (ID), and a list of RAN functions previously accepted by the Near-RT RIC. The list of RAN functions may include, for each RAN function, a RAN function ID, a RAN function revision, and a RAN function object identifier (OID) indicating a specific E2 service model (E2SM).

For one or more embodiments, at least one of components described in one or more of the preceding drawings may be configured to perform one or more operations, techniques, processes, and/or methods as described in the present disclosure. For example, a processor (e.g., a baseband processor) described in the present disclosure in association with one or more of the preceding drawings may be configured to operate according to one or more examples described in the present disclosure. For another example, a circuit associated with user equipment (UE), a base station, a network element, or the like, as described above in association with one or more of the preceding drawings, may be configured to operate according to one or more examples described herein.

Any of the embodiments described above may be combined with any other embodiment (or a combination of embodiments) unless explicitly stated otherwise. The foregoing description of one or more implementations is provided for illustration and explanation, but is not intended to limit the scope of the embodiments or to be exhaustive to the precise forms disclosed. Modifications and variations are possible in light of the above teachings or may be obtained from practice of various embodiments.

Methods according to embodiments described in claims or specifications of the present disclosure may be implemented as a form of hardware, software, or a combination of hardware and software.

In a case of implementing as software, a computer-readable storage medium (e.g., a non-transitory computer-readable storage medium) for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A method performed by an E2 node, the method comprising:
receiving a RIC service query message from a Near-real time (RT) radio access network (RAN) intelligent controller (Near-RT RIC); and
in response to the RIC service query message, transmitting a RIC service update message to the Near-RT RIC,
wherein the RIC service query message includes a message type, a transaction identifier (ID), and a list of RAN functions previously accepted by the Near-RT RIC, and
wherein the list of RAN functions includes, for each RAN function, a RAN function ID, a RAN function revision, and a RAN function object identifier (OID) indicating a specific E2 service model (E2SM).

2. The method of claim 1,
wherein the list of RAN functions further includes, for each RAN function, RAN function definition information,
wherein the RAN function definition information is used to provide information necessary for the Near-RT RIC in order to support a corresponding RAN function at the E2 node, and
wherein the RAN function OID is used to identify a RAN function definition in the RAN function definition information.

3. The method of claim 2, wherein the RAN function OID indicates one of a plurality of service models, wherein the plurality of service models includes an E2SM- network interface (NI), an E2SM- key performance monitoring (KPM) version 1, an E2SM-KPM version 2, an E2SM- radio control (RC), and an E2SM- cell configuration and control (CCC).

4. The method of claim 1, further comprising receiving a RIC service update acknowledge message or a RIC service update failure message from the Near-RT RIC,
wherein, in a case that RAN functions supported at the E2 node do not match the functions in the list, the RIC service update message includes an addition list for RAN functions, a modification list for RAN functions, and/or a deletion list for RAN functions, and
wherein, in a case that RAN functions supported at the E2 node match the functions in the list, the RIC service update message does not include the addition list, the modification list, and the deletion list.

5. The method of claim 1, further comprising:
receiving, from the Near-RT RIC, a second RIC service query message that does not include a list of RAN functions; and
transmitting a second RIC service update message to the Near-RT RIC,
wherein the second RIC service update message includes a list of all RAN functions supported at the E2 node, in response to the second RIC service query message that does not include the list of RAN functions.

6. A method performed by a Near-real time (RT) radio access network (RAN) intelligent controller (Near-RT RIC), the method comprising:
transmitting a RIC service query message to an E2 node; and
receiving a RIC service update message from the E2 node,
wherein the RIC service query message includes a message type, a transaction identifier (ID), and a list of RAN functions previously accepted by the Near-RT RIC, and
wherein the list of RAN functions includes, for each RAN function, a RAN function ID, a RAN function revision, and a RAN function object identifier (OID) indicating a specific E2 service model (E2SM).

7. The method of claim 6,
wherein the list of RAN functions further includes, for each RAN function, RAN function definition information,
wherein the RAN function definition information is used to provide information necessary for the Near-RT RIC in order to support a corresponding RAN function at the E2 node, and
wherein the RAN function OID is used to identify a RAN function definition in the RAN function definition information.

8. The method of claim 7, wherein the RAN function OID indicates one of a plurality of service models, wherein the plurality of service models includes an E2SM- network interface (NI), an E2SM- key performance monitoring (KPM) version 1, an E2SM-KPM version 2, an E2SM- radio control (RC), and an E2SM- cell configuration and control (CCC).

9. The method of claim 6, further comprising transmitting a RIC service update acknowledge message or a RIC service update failure message to the E2 node,
wherein, in a case that RAN functions supported at the E2 node do not match the functions in the list, the RIC service update message includes an addition list for RAN functions, a modification list for RAN functions, and/or a deletion list for RAN functions, and
wherein, in a case that RAN functions supported at the E2 node match the functions in the list, the RIC service update message does not include the addition list, the modification list, and the deletion list.

10. The method of claim 6, further comprising:
transmitting, to the E2 node, a second RIC service query message that does not include a list of RAN functions; and
receiving a second RIC service update message from the E2 node,
wherein the second RIC service update message includes a list of all RAN functions supported at the E2 node, in response to the second RIC service query message that does not include the list of RAN functions.

11. An electronic device of an E2 node comprising:
at least one processor; and
memory storing instructions that, when executed by the at least one processor, cause the E2 node to:
receive a RIC service query message from a Near-real time (RT) radio access network (RAN) intelligent controller (Near-RT RIC); and
in response to the RIC service query message, transmit a RIC service update message to the Near-RT RIC,
wherein the RIC service query message includes a message type, a transaction identifier (ID), and a list of RAN functions previously accepted by the Near-RT RIC, and
wherein the list of RAN functions includes, for each RAN function, a RAN function ID, a RAN function revision, and a RAN function object identifier (OID) indicating a specific E2 service model (E2SM).

12. The electronic device of claim 11,
wherein the list of RAN functions further includes, for each RAN function, RAN function definition information,
wherein the RAN function definition information is used to provide information necessary for the Near-RT RIC in order to support a corresponding RAN function at the E2 node, and
wherein the RAN function OID is used to identify a RAN function definition in the RAN function definition information.

13. The electronic device of claim 12, wherein the RAN function OID indicates one of a plurality of service models, wherein the plurality of service models includes an E2SM- network interface (NI), an E2SM- key performance monitoring (KPM) version 1, an E2SM-KPM version 2, an E2SM- radio control (RC), and an E2SM- cell configuration and control (CCC).

14. The electronic device of claim 11, wherein the instructions, when executed by the at least one processor, cause the E2 node to receive a RIC service update acknowledge message or a RIC service update failure message from the Near-RT RIC,
wherein, in a case that RAN functions supported at the E2 node do not match the functions in the list, the RIC service update message includes an addition list for RAN functions, a modification list for RAN functions, and/or a deletion list for RAN functions, and
wherein, in a case that RAN functions supported at the E2 node match the functions in the list, the RIC service update message does not include the addition list, the modification list, and the deletion list.

15. An electronic device of a Near-real time (RT) radio access network (RAN) intelligent controller (Near-RT RIC), comprising:
at least one processor; and
memory storing instructions that, when executed by the at least one processor, cause the Near-RT RIC to:
transmit a RIC service query message to an E2 node; and
receive a RIC service update message from the E2 node,
wherein the RIC service query message includes a message type, a transaction identifier (ID), and a list of RAN functions previously accepted by the Near-RT RIC, and
wherein the list of RAN functions includes, for each RAN function, a RAN function ID, a RAN function revision, and a RAN function object identifier (OID) indicating a specific E2 service model (E2SM).
